# EUROPÄISCHE PATENTSCHRIFT

(11) **EP 2 691 715 B1**
(45) Veröffentlichungstag und Bekanntmachung des Hinweises auf die Patenterteilung: **11.09.2019**
(21) Anmeldenummer: 12710509.6
(22) Anmeldetag: 26.03.2012
(51) Int. Cl.: F25D 23/06

(54) **DYNAMISCH EVAKUIERBARE VORRICHTUNGEN UMFASSEND ORGANISCHE AEROGELE ODER XEROGELE**
DYNAMICALLY EVACUABLE APPARATUSES COMPRISING ORGANIC AEROGELS OR XEROGELS
DISPOSITIFS POUVANT ÊTRE DYNAMIQUEMENT MIS SOUS VIDE, COMPRENANT DES AÉROGELS OU XÉROGELS ORGANIQUES

(30) Priorität: 31.03.2011 EP 11160648
(43) Veröffentlichungstag der Anmeldung: 05.02.2014
(73) Patentinhaber: BASF SE, 67056 Ludwigshafen am Rhein (DE)
(72) Erfinder: FRICKE, Marc, 49090 Osnabrück (DE); SCHÜTTE, Markus, 49080 Osnabrück (DE); FECHNER, Frank, 49324 Melle (DE); KROGMANN, Jörg, 49393 Lohne (DE)
(74) Vertreter: BASF IP Association
(86) Internationale Anmeldenummer: PCT/EP2012/055272
(87) Internationale Veröffentlichungsnummer: WO 2012/130779

(56) Entgegenhaltungen:
- EP-A1- 0 860 669
- WO-A1-00/18225
- WO-A1-2005/093349
- WO-A1-2008/138978
- WO-A1-2009/027310
- US-A1- 2004 186 191

## Beschreibung

Die vorliegende Erfindung betrifft eine elektrisch betriebene und dynamisch evakuierbare Vorrichtung umfassend einen zusammenhängend evakuierbaren Bereich und einen temperierbaren Nutzbereich, der durch den zusammenhängend evakuierbaren Bereich gegenüber der Umgebungstemperatur thermisch gedämmt wird, sowie ein Mittel zur aktiven Aufrechterhaltung eines Vakuums, so dass der Druck im zusammenhängend evakuierbaren Bereich der Vorrichtung zeitlich konstant in einem vorgegebenen Druckbereich liegt, wobei der zusammenhängend evakuierbare Bereich mindestens 20 Vol.-% des gesamten Volumens ausmacht, welches von einem porösen und/oder zellulären Dämmstoff in der Vorrichtung eingenommen wird, und der zusammenhängend evakuierbare Bereich mindestens ein organisches Aerogel und/oder organisches Xerogel beinhaltet.

Weiterhin betrifft die Erfindung die Verwendung von organischen Aerogelen oder organischen Xerogelen innerhalb eines zusammenhängend evakuierbaren Bereiches in elektrisch betriebenen und dynamisch evakuierbaren Vorrichtungen, die neben dem zusammenhängend evakuierbaren Bereich einen temperierbaren Nutzbereich, der durch den zusammenhängend evakuierbaren Bereich gegenüber der Umgebungstemperatur thermisch gedämmt wird, sowie ein Mittel zur aktiven Aufrechterhaltung eines Vakuums, so dass der Druck im zusammenhängend evakuierbaren Bereich der Vorrichtung zeitlich konstant in einem vorgegebenen Druckbereich liegt, aufweisen, wobei der zusammenhängend evakuierbare Bereich mindestens 30 Vol.-% des gesamten Volumens ausmacht, welches von einem porösen und/oder zellulären Dämmstoff in der Vorrichtung eingenommen wird.

Die Wärmedämmung zur Einsparung von Energie hat einen hohen Stellenwert. Der Wärmedämmung kommt vor dem Hintergrund steigender Energiepreise und dem Streben nach einer Reduzierung des CO₂-Ausstosses sowie auch zukünftig noch steigenden Anforderungen an den Wärme- und Kälteschutz eine immer höhere Bedeutung zu. Diese steigenden Anforderungen an eine Optimierung des Wärmedämmschutzes umfassen sowohl Gebäude als auch Kälteisolierungen im mobilen, logistischen und im stationären Bereich.

Wärmedämmvorrichtungen beinhalten einen definierten Nutzbereich, der durch eine entsprechende Dämmung gegenüber der Umgebung abgegrenzt ist, wobei die Temperatur des Nutzbereiches entweder oberhalb oder unterhalb der Aussentemperatur liegt. Hierzu zählen beispielsweise Kühlschränke, Kühltruhen, Kühlhäuser, Kühlcontainer, Kühlboxen, Kühl-LKWs oder auch Warmwasserspeicher.

Die Wärmedämmung (nachfolgend synonym zu dem Begriff thermische Dämmung sowie thermische Isolation verwendet) des Nutzraumes gegenüber der Umgebung erfolgt im Stand der Technik durch Wärmedämm-Materialien (nachfolgend synonym zum Begriff Dämmstoff verwendet).

Für Zwecke der thermischen Dämmung sind eine Vielzahl an Dämm-Materialien bekannt, wobei geschlossenzellige Schaumstoffe aufgrund ihrer besonders niedrigen Wärmeleitfähigkeit eine herausragende Rolle spielen. Geschlossenzellige Polyurethan(PUR-)-Hartschaumstoffe zählen dabei zu den Materialien mit den niedrigsten Wärmeleitfähigkeiten. Die PUR-Hartschaumstoffe werden meist mit physikalischen Treibmitteln wie Alkanen oder fluorierten Kohlenwasserstoffen zur Verschäumung gebracht, die ihrerseits eine niedrigere Wärmeleitfähigkeit als Luft haben und in den Zellen des Schaumstoffes verbleiben. Der vorherschende Druck im Schaumstoff entspricht dabei dem Aussendruck.

In jüngster Zeit wurden auch evakuierte offenzellige Schaumstoffe aus PUR oder offenporige, mesoporöse Pulverschüttungen wie Aerosile in Form von Vakuumisolations-Paneelen (VIPs) eingesetzt. Die VIPs werden in Plattenform in weiteren Zusatzschritten zusammen mit konventionellen Dämmstoffen in der späteren Dämmeinheit eingesetzt. Beispielsweise werden VIPs heutzutage in Kühlschränken durch Einkleben und Umschäumen mit PUR integriert und tragen damit zur Absenkung des Energieverbrauchs bei. Der größte Nachteil der VIPs besteht im Zusatzaufwand für die Fertigung der VIPs und für deren Einbau in das Gerät. Da die VIPs immer nur einen Teil der Gesamtdämmung ausmachen, müssen niedrige Unterdrücke zur Erlangung entsprechend niedriger Wärmeleitfähigkeiten erzielt werden. Um diesen Unterdruck für die Lebensdauer des Gerätes möglichst stabil zu halten, werden höchste Anforderungen an die Dichtigkeit des Hüllenmaterials gestellt. Üblicherweise werden hier heute entweder metallisierte Aluminium-Mehrschichtfolien oder auch Aluminium-Verbundfolien eingesetzt.

Eine weitere technische Alternative stellt die Evakuierung oder auch Teilevakuierung des gesamten für die thermische Dämmung vorgesehenen Volumens dar, wobei die Evakuierung grundsätzlich dynamisch oder auch statisch erfolgen kann. Der große Vorteil gegenüber der Kombination aus VIPs und deren Umhüllung mit konventionellen Dämmstoffen besteht darin, dass das gesamte den Dämmstoff ausmachende Volumen einem verringerten Druck ausgesetzt ist und damit der notwendige Unterdruck vergleichsweise geringer als in einem konventionellen VIP ausfallen kann oder bei gleichem Unterdruck eine höhere Dämmwirkung erzielt werden kann. Derartige evakuierbare Vorrichtungen sind dem Fachmann an sich schon bekannt.

Die US 1898977 beschreibt einen Kühlschrank mit evakuierbarer Dämmung. Als Dämm-Material wird ein feinteiliger Füllstoff und hierdurch erzeugte Hohlräume mit möglichst kleinen Dimensionen, idealerweise deutlich kleiner als die mittlere freie Weglänge von Gasmolekülen, vorgeschlagen. Zur Vermeidung der thermischen Eckenableitung sollen die Metallschichten zwischen Außen- und Innenwand über Brücken aus Materialien mit geringer Wärmeleitfähigkeit verbunden sein. Silocel, Kork und Papier werden als Dämm-Material genannt.

In der EP 0 587 546 A1 wird ein evakuierbarer Kühlschrank beschrieben, der mit einer permanent installierten Vakuumpumpe versehen ist. Die Vakuumpumpe evakuiert das in einem luftdicht verschliessbarem Gehäuse angeordnete Dämm-Material. Aufgrund der langen Evakuierzeiten ist es vorgesehen, dass die Pumpe erst aktiviert wird, wenn der Schrank beim Verwender installiert wurde. Eine Evakuierung der Geräte während der Produktion würde die Zykluszeiten für die Herstellung eines Gerätes verlängern, so dass der Produktionsprozess unwirtschaftlich wird. Es handelt sich um eine spezielle Pumpe, die einen sehr niedrigen Energieverbrauch aufweist und damit die Energieeinsparung durch die Verbesserung der Dämmeigenschaften weit über der Energie liegt, die für das Betreiben der Vakuumpumpe benötigt wird. Konventionelle Vakuumpumpen sind aufgrund des zu hohen Eigenverbrauchs an Energie ungeeignet.

Als Dämm-Material wird ein rein wassergetriebener geschlossenzelliger PUR-Schaum vorgeschlagen. In diesem Fall enthalten die Zellen des Schaumstoffes zunächst Kohlendioxid, welches eine im Vergleich zu Luft um den Faktor Fünf höhere Diffusionsgeschwindikeit aufweist. Es wird ein Unterdruck von kleiner 0,1 mbar angestrebt.

Der große technische Nachteil dieses Ansatzes besteht darin, dass extrem lange Evakuierzeiten notwendig sind. Dies wird durch die Geschlossenzelligkeit des Schaumstoffes verursacht. Des weiteren müssen sehr niedrige Drücke erzielt werden, um eine ausreichende Absenkung der Wärmeleitfähigkeit zu realisieren. Dies hängt mit dem großen Zelldurchmesser konventioneller Hartschäume zusammen.

Die EP 0 587 548 A1 beschreibt einen ähnlichen Gegenstand, wobei der Schwerpunkt hier auf die Geschlossenzelligkeit des Dämm-Materials gelegt wird. Offenzellige Schaumstoffe werden als nachteilig beschrieben, da hier keine ausreichende mechanische Festigkeit bei niedrigen Dichten erzielt werden kann.

Die EP 1 335 171 A1 beschreibt einen evakuierbaren Kühlschrank, bei dem zur Verkürzung der Evakuierzeiten das Wärmedämm-Material mit einem Netz von Kanälen ausgestattet wird. Beispielsweise erfolgt die Evakuierung der Rückseitenwand über eine Spinnennetz-artige Anordnung von Absaugkanälen. Als Wärmedämm-Materialien werden offenzelliges Polyurethan und Polystyrol erwähnt. Des weiteren wird auf die Problematik zu langer Evakuierzeiten mit den bestehenden Materialien verwiesen.

Die WO 2005/093349 beschreibt einen evakuierten Kühlschrank, der mit Pulver als Wärmedämm-Material gefüllt ist. Es wird darauf verwiesen, dass das Vakuum grundsätzlich statisch und dynamisch angelegt werden kann. Der Kühlschrank benötigt keine Vakuumpumpe, da diese Funktion mit vom Kompressor übernommen wird.

Die WO 2004/010042 beschreibt einen evakuierbaren Kühlschrank, der eine Pulverschüttung enthält. Eine Möglichkeit zur Befüllung besteht über eine Öffnung in der Rückseite des Gehäuses. Es werden unterschiedliche Varianten zur späteren Abdichtung erwähnt.

Die WO 2010/127947 beschreibt vollevakuierte Türelemente. Als Füllmaterial wird offenporiges PUR, Polystyrol oder Silica-Pulver erwähnt.

Die im Stand der Technik vorgeschlagenen Vorrichtungen weisen jedoch grundsätzliche Nachteile auf, die eine technische Realisierung bislang verhinderten. Die Ursache liegt in den eingesetzten Dämmstoffen. Bislang verwendete Dämmstoffe weisen, sofern sie überhaupt offenzellig sind, keine geeignete Porenstruktur auf, die ausreichend kurze Evakuierzeiten zulässt. Auch vollständig offenzellige Schaumstoffe können nämlich lange Evakuierzeiten benötigen, wenn die Größe der Löcher im Zellfenster klein ist und der Schaumstoff weit von der idealen Form eines reinen Stegschaums abweicht. Des Weiteren sind bekannte Dämmstoffe mit günstigen Wärmedämmeigenschaften nur in Form von Plattenware oder als Pulver (teilweise auch in gepresster Form) verfügbar. Eine nachträgliche Anpassung der Formkörper an die für das Gerät notwendige Geometrie lässt sich, wenn überhaupt möglich, nur unter großem Aufwand realisieren und es treten signifikante Mengen an Abfall auf. Im Falle von Pulverschüttungen ist es meist nicht möglich, komplizierte Geometrien z.B. Hinterschnitte vollständig zu füllen bzw. eine ausreichend definierte Verdichtung zu erzielen.

Bekannte offenzellige Dämmstoffe weisen zudem den Nachteil auf, dass sie bei der Herstellung eine Haut bilden. Hierdurch wird die Evakuierbarkeit beeinträchtigt, und zwar insbesondere bei größeren zusammenhängend evakuierbaren Bereichen, da die Haut das Abpumpen des die Zellen füllenden Gases behindert.

Die technische Realisierung der vorgenannten Kühlvorrichtungen scheiterte somit bislang an dem Nicht-Vorliegen eines geeigneten Isolationsmaterials.

Eine verbesserte evakuierbare Wärmedämmvorrichtung wie zum Beispiel ein evakuierbarer Kühlschrank sollte eine kurze Evakuierzeit und damit verbunden kürzere Pumpzeiten und kürzere Pumpzyklen sowie geringere Anforderungen an die Dichtheit der Hülle des zusammenhängend zu evakuierenden Bereiches aufweisen.

Das im zusammenhängend evakuierbaren Bereich enthaltene Dämm-Material sollte gleichzeitig folgende Eigenschaften aufweisen:
- Geringer Materialverbrauch bei der Herstellung der Wärmedämmung in der Vorrichtung
- Hohe Absenkung der Wärmeleitfähigkeit bei Drücken im Bereich von 1 bis 10 mbar
- Einstellbarkeit einer komplexen dreidimensionalen Geometrie ohne Nachbehandlungsschritte
- Geringes Aufnahmevermögen für Wasserdampf und niedriges Absorptionsvermögen für Gase im Allgemeinen, was für die dynamische Aufrechterhaltung eines Vakuums besonders wichtig ist.

Es war die Aufgabe der vorliegenden Erfindung, eine evakuierbare Wärmedämmvorrichtung aufzufinden, welche die oben genannten Nachteile vermeidet oder in geringerem Umfang aufweist. Insbesondere sollte der Zeitraum, innerhalb dessen sich eine angestrebte Druckdifferenz im gesamten zu evakuierenden Volumen einstellt (Evakuierzeit bei gegebener Druckabsenkung), gegenüber dem Stand der Technik verringert werden. Das verwendete Dämm-Material sollte die vorgenannten Eigenschaften aufweisen.

Demgemäß wurden die erfindungsgemäße Vorrichtung und die erfindungsgemäße Verwendung gefunden.

Bevorzugte Ausführungsformen sind den Ansprüchen und der Beschreibung zu entnehmen. Kombinationen bevorzugter Ausführungsformen verlassen den Rahmen dieser Erfindung nicht.

Die erfindungsgemäße Vorrichtung umfasst einen zusammenhängend evakuierbaren Bereich und einen temperierbaren Nutzbereich, der durch den zusammenhängend evakuierbaren Bereich gegenüber der Umgebungstemperatur thermisch gedämmt wird, sowie ein Mittel zur aktiven Aufrechterhaltung eines Vakuums, so dass der Druck im zusammenhängend evakuierbaren Bereich der Vorrichtung zeitlich konstant in einem vorgegebenen Druckbereich liegt, wobei der zusammenhängend evakuierbare Bereich mindestens 20 Vol.-% des gesamten Volumens ausmacht, welches von einem porösen und/oder zellulären Dämmstoff in der Vorrichtung eingenommen wird, und der zusammenhängend evakuierbare Bereich mindestens ein organisches Aerogel und/oder organisches Xerogel beinhaltet.

Der Begriff "ein zusammenhängend evakuierbarer Bereich" ist dabei grundsätzlich als "mindestens ein zusammenhängend evakuierbarer Bereich" zu verstehen. Somit kann die erfindungsgemäße Vorrichtung auch mehrere der so definierten zusammenhängend evakuierbaren Bereiche umfassen, wobei dann jeder einzelne das Aerogel und/oder Xerogel beinhaltende Bereich für sich (separat) zusammenhängend evakuierbar ist. Selbstredend können mehrere solcher Bereiche durch eine einzige Evakuierungsvorrichtung angesteuert werden. Erfindungswesentlich ist jedenfalls, dass einer der genannten Bereiche mindestens 30 Vol.-% des gesamten Volumens ausmacht, welches von einem porösen und/oder zellulären Dämmstoff in der Vorrichtung eingenommen wird. Ggf. könne auch zwei oder mehrere zusammenhängend evakuierbaren Bereiche beinhaltend Aerogel und/oder Xerogel jeweils für sich diesem Kriterium genügen.

Organische Aerogele und organische Xerogele sind an sich bekannt. In der Literautur wird unter einem Xerogel ein poröses Material verstanden, welches durch ein Sol-Gel-Verfahren hergestellt wurde, wobei die flüssige Phase durch Trocknung unterhalb der kritischen Temperatur und unterhalb des kritischen Drucks der flüssigen Phase ("subkritische Bedingungen") aus dem Gel entfernt wurde. Im Gegensatz hierzu spricht man von Aerogelen, wenn die Entfernung der flüssigen Phase aus dem Gel unter überkritischen Bedingungen durchgeführt wurde.

Beim Sol-Gel-Verfahren wird zunächst ein Sol auf Basis einer reaktiven organischen Gelvorstufe hergestellt und danach das Sol durch eine vernetzende Reaktion zu einem Gel geliert. Um aus dem Gel ein poröses Material, beispielsweise ein Xerogel, zu erhalten, muss die Flüssigkeit entfernt werden. Dieser Schritt wird nachfolgend vereinfachend als Trocknung bezeichnet.

Aus der WO-2008/138978 sind Xerogele enthaltend von 30 bis 90 Gew.-% mindestens eines mehrfunktionellen Isocyanats und von 10 bis 70 Gew.-% mindestens eines mehrfunktionellen aromatischen Amins bekannt, deren volumengewichteter mittlerer Porendurchmesser höchstens 5 Mikrometer beträgt.

Ein zusammenhängend evakuierbarer Bereich ist ein räumlich abgeschlossener Bereich innerhalb der erfindungsgemäßen Vorrichtung, der zusammenhängend evakuierbar ist, d. h. durch Anlegen eines Vakuums an einer Stelle der gesamte Bereich einen Unterdruck erfährt.

Der Begriff "zusammenhängend evakuierbar" bedeutet dabei, dass der Druck in dem betreffenden Bereich nach der Evakuierung dauerhaft gegenüber dem Umgebungsdruck verringert ist, d.h. der betreffende Bereich gegenüber der Umgebung bezüglich Gasdiffusion (Diffusion der Luftbestandteile) abgeschlossen ist. Dem Fachmann ist bewusst, dass eine Druckdifferenz immer nur zeitlich begrenzt aufrecht erhalten werden kann. Nach der Evakuierung (d. h. nach der Einstellung eines Unterdrucks) muss mindestens über einen Zeitraum von 1 Stunde ein Unterdruck aufrechterhalten werden, um dem Kriterium "evakuierbar" und "abgeschlossen" zu genügen, insbesondere mindestens 4 Stunden, besonders bevorzugt mindestens 24 Stunden.

Der temperierbare Nutzbereich ist der Bereich innerhalb der Vorrichtung, in dem die gegenüber der Umgebungstemperatur erniedrigte oder erhöhte Temperatur aufrecht erhalten werden soll.

Das gesamte Volumen, das von einem porösen und/oder zellulären Dämmstoff innerhalb der Vorrichtung eingenommen wird, entspricht dem Volumen aller porösen und/oder zellulären Dämmstoffe in der Vorrichtung und schließt die Poren bzw. Zellen mit ein. Poröse und/oder zelluläre Dämmstoffe sind Stoffe, die Zellen oder Poren aufweisen, welche ganz oder teilweise von dem Dämmstoffmaterial umgeben sind, d. h. es handelt sich um Materialien, die eine erste feste Phase und eine zweite Phase beinhalten, die mit einem Gas gefüllt ist (ggf. bei Unterdruck oder Vakuum). Die Poren oder Zellen verringern die Wärmeleitfähigkeit des Dämmstoffes. Poröse und/oder zelluläre Materialien können offenzellig oder geschlossenzellig sein. Mischformen sind ebenfalls denkbar. Diese Definition schließt alle Materialien ein, die Poren und/oder Zellen aufweisen und für Zwecke der Wärmedämmung in die Vorrichtung eingebracht werden, neben den erfindungsgemäß enthaltenen organischen Aerogelen und/oder Xerogelen insbesondere Schaumstoffe wie zum Beispiel Polyurethanschäume oder Schaumstoffe auf Basis von Polystyrol.

Vorzugsweise beträgt das Volumen des erfindungsgemäß umfassten zusammenhängend evakuierbaren Bereichs beinhaltend organische Aerogele oder Xerogele mindestens 30 Vol.-%, insbesondere mindestens 40 Vol.-%, besonders bevorzugt mindestens 50 Vol.-%, insbesondere mindestens 60 Vol.-%, ganz besonders bevorzugt mindestens 70 Vol.-% bezogen auf das gesamte Volumen, welches von einem porösen und/oder zellulären Dämmstoff in der Vorrichtung eingenommen wird.

Unter Vakuum wird ein Unterdruck gegenüber dem Umgebungsdruck verstanden. Die Evakuierung ist somit die Erzeugung eines Unterdrucks gegenüber dem Umgebungsdruck.

Unter einem Xerogel wird im Rahmen der vorliegenden Erfindung ein poröses Material mit einer Porosität von mindestens 70 Vol.-% und einem volumengemittelten mittleren Porendurchmesser von höchstens 50 Mikrometer verstanden, welches durch ein Sol-Gel-Verfahren hergestellt wurde, wobei die flüssige Phase durch Trocknen unterhalb der kritischen Temperatur und unterhalb des kritischen Drucks der flüssigen Phase ("subkritische Bedingungen") aus dem Gel entfernt wurde.

Entsprechend ist unter einem Aerogel im Rahmen der vorliegenden Erfindung ein poröses Material mit einer Porosität von mindestens 70 Vol.-% und einem volumengemittelten mittleren Porendurchmesser von höchstens 50 Mikrometer verstanden, welches durch ein Sol-Gel-Verfahren hergestellt wurde, wobei die flüssige Phase durch Trocknen oberhalb der kritischen Temperatur und oberhalb des kritischen Drucks der flüssigen Phase ("überkritische Bedingungen") aus dem Gel entfernt wurde.

Der mittlere Porendurchmesser wird mittels Quecksilber-Intrusionsmessung nach DIN 66133 bestimmt und ist im Rahmen der vorliegenden Erfindung grundsätzlich ein volumengewichteter Mittelwert. Die Quecksilber-Intrusionsmessung nach DIN 66133 ist eine porosimetrische Methode und wird in einem Porosimeter durchgeführt. Dabei wird Quecksilber in eine Probe des porösen Materials gepresst. Kleine Poren erfordern einen höheren Druck, um mit dem Quecksilber gefüllt zu werden als große Poren, und aus dem entsprechenden Druck/Volumen-Diagramm kann man eine Porengrößenverteilung und den volumengewichteten mittleren Porendurchmesser bestimmen.

Vorzugsweise beträgt der volumengewichtete mittlere Porendurchmesser des porösen Materials höchstens 20 Mikrometer. Besonders bevorzugt beträgt der volumengewichtete mittlere Porendurchmesser des porösen Materials höchstens 10 Mikrometer, ganz besonderes bevorzugt höchstens 5 Mikrometer und insbesondere höchstens 3 Mikrometer.

Zwar ist eine möglichst geringe Porengröße bei hoher Porosität aus Sicht einer geringen thermischen Leitfähigkeit wünschenswert. Herstellungsbedingt ergibt sich jedoch eine praktische untere Grenze des volumengewichteten mittleren Porendurchmessers. Im Allgemeinen beträgt der volumengewichtete mittlere Porendurchmesser mindestens 50 nm, vorzugsweise mindestens 100 nm. In vielen Fällen beträgt der volumengewichtete mittlere Porendurchmesser mindestens 200 nm, insbesondere mindestens 300 nm.

Die erfindungsgemäße Vorrichtung wird elektrisch betrieben. Vorzugsweise erfolgt die Temperierung des Nutzbereiches der erfindungsgemäßen Vorrichtung durch aktiven Energieeintrag. Vorzugsweise ist das Mittel zur aktiven Aufrechterhaltung des Vakuums ein Kompressor und/oder eine Pumpe, die insbesondere elektrisch betrieben wird.

In einer ersten bevorzugten Ausführungsform der vorliegenden Erfindung ist die erfindungsgemäße Vorrichtung ein Kühlgerät, besonders bevorzugt ein Kühlschrank, eine Kühltruhe, ein Kühlhaus, ein elektrisch betriebener Kühlbehälter oder ein Kühl-LKW. Ein Kühlgerät ist eine Vorrichtung, mit der ein definierter Nutzraum durch Energieeintrag gekühlt wird, so dass der Nutzraum gegenüber der Umgebungstemperatur kühler ist (eine niedrigere Temperatur aufweist).

In einer weiteren bevorzugten Ausführungsform der vorliegenden Erfindung ist die erfindungsgemäße Vorrichtung eine Vorrichtung zum Wärmen von Materialien, insbesondere ein Warmwasserspeicher.

Eine dynamisch evakuierbare Vorrichtung ist eine evakuierbare Vorrichtung wie oben definiert, in der das Vakuum aktiv derart aufrechterhalten wird, dass es zeitlich konstant in einem vorgegebenen Druckbereich liegt. Aktiv bedeutet dabei: durch wiederkehrendes Zutun des Mittels zur Aufrechterhaltung des Vakuums. Hierbei wird das Vakuum durch die Abgeschlossenheit des Bereiches einerseits und durch eine wiederkehrende Druckerniedrigung aufrechterhalten. Die wiederkehrende Druckerniedrigung kann entweder dauerhaft oder periodisch wiederkehrend erfolgen, wobei letzteres bevorzugt ist. Eine vollevakuierbare Vorrichtung ist im Gegensatz hierzu eine Vorrichtung wie oben definiert, in der das Vakuum durch einmaliges Anlegen entsteht und lediglich durch die Abgeschlossenheit des Bereiches aufrechterhalten wird.

Derartige Vorrichtungen sind dem Fachmann an sich bekannt. Die erfindungsgemäß verwendeten organischen Aerogele oder organischen Xerogele können vorteilhaft in allen Vorrichtungen Verwendung finden, die neben dem zusammenhängend evakuierbaren Bereich einen temperierbaren Nutzbereich, der durch den zusammenhängend evakuierbaren Bereich gegenüber der Umgebungstemperatur thermisch gedämmt wird, aufweisen, wobei der zusammenhängend evakuierbare Bereich mindestens 20 Vol.-% des gesamten Volumens ausmacht, welches von einem Dämmstoff in der Vorrichtung eingenommen wird. Besondere Einschränkungen hinsichtlich der technischen Konzeption der Wärmedämmvorrichtung selbst bestehen nicht.

Besonders bevorzugte Vorrichtungen sind dynamisch evakuierbare Kühlgeräte, insbesondere Kühlschränke.

Ein geeigneter, dynamisch evakuierbarer elektrisch betriebener Kühl- oder Gefrierschrank weist einen oder mehrere abgeschlossene thermisch isolierte Bereiche auf, die eine Gehäuse-, Wand- und/oder Türfüllung in dem Kühl- oder Gefrierschrank sind, wobei der Raum oder die Räume über eine Evakuierungsleitung mit einer Vakuumerzeugungsvorrichtung verbunden sind und die Vakuumerzeugungsvorrichtung eine permanent installierte Einheit in dem Kühl- oder Gefrierschrank ist. Ein solcher Kühl- oder Gefrierschrank ist beispielsweise aus der US-A 18 98 977 und aus der FR-A-26 28 179 sowie aus der EP-A 0587546 bekannt.

Die genaue technische Konzeption, mit der das statische oder dynamische Vakuum eingestellt wird, ist für die vorliegende Erfindung nicht relevant. Vielmehr können die erfindungsgemäß verwendeten porösen Materialien vorteilhaft als Dämmstoff verwendet werden, wenn große Volumina enthaltend ein Dämmstoff zusammenhängend evakuiert werden. Beispielsweise kann der Schrank wie in der EP-A 0587546 beschrieben bei der Herstellung mit einer Vakuumpumpe ausgestattet werden, die mit luftdicht verschlossenen Räumen in den Wänden und der Tür des Schranks verbunden ist, wobei die Räume mit dem erfindungsgemäßen wärmeisolierenden Material gefüllt sind. Wenn der Schrank durch den Verwender eingeschaltet wird, wird die Pumpe aktiviert und erzeugt dann schrittweise einen sehr niedrigen Druck während einer langen Einsatzperiode, was bedeutet, dass von einer Woche bis zu einigen Monaten dabei schrittweise der Wirkungsgrad der Isolation gesteigert wird. Alternativ kann ein in der Vorrichtung verwendeter Kompressor dazu verwendet werden, einen Unterdruck in dem evakuierbaren Bereich aufrecht zu erhalten, wie zum Beispiel in der WO 2005/093349 beschrieben.

Im Rahmen der vorliegenden Erfindung bevorzugte organische Xerogele und Aerogele werden nachfolgend beschrieben.

Vorzugsweise ist das organische Aerogel oder Xerogel auf Basis von Isocyanaten und optional weiteren Komponenten, die gegenüber Isocyanaten reaktiv sind, aufgebaut.

Besonders bevorzugt ist das organische Aerogel oder Xerogel auf Basis von Isocyanaten und gegenüber Isocyanaten reaktiven Komponenten aufgebaut, wobei als gegenüber Isocyanaten reaktive Komponente mindestens ein mehrfunktionelles aromatisches Amin verwendet wird. Vorzugsweise ist das organische Xerogel oder Aerogel auf Basis von Polyharnstoff und/oder Polyisocyanurat aufgebaut.

"Auf Basis von Polyharnstoff aufgebaut" bedeutet, dass mindestens 50 mol-%, vorzugsweise mindestens 70 mol-%, insbesondere mindestens 90 mol-% der Verknüpfungen der Monomereinheiten im organischen Xerogel oder Aerogel als Harnstoffverknüpfungen vorliegen. "Auf Basis von Polyisocyanurat aufgebaut" bedeutet, dass mindestens 50 mol-%, vorzugsweise mindestens 70 mol-%, insbesondere mindestens 90 mol-% der Verknüpfungen der Monomereinheiten im organischen Xerogel oder Aerogel als Isocyanuratverknüpfungen vorliegen. "Auf Basis von Polyharnstoff und/oder Polyisocyanurat aufgebaut" bedeutet, dass mindestens 50 mol-%, vorzugsweise mindestens 70 mol-%, insbesondere mindestens 90 mol-% der Verknüpfungen der Monomereinheiten im organischen Xerogel oder Aerogel als Harnstoffverknüpfungen und/oder Isocyanuratverknüpfungen vorliegen.

Auf das erfindungsgemäß verwendete organische Aerogel oder Xerogel wird nachfolgend als organisches poröses Material Bezug genommen.

Vorzugsweise wird das verwendete organische poröse Material in einem Verfahren erhalten, welches folgende Schritte umfasst:
(a) Umsetzung von mindestens einem mehrfunktionellen Isocyanat (a1) und mindestens einem mehrfunktionellen aromatischen Amin (a2) in einem Lösungsmittel optional in Gegenwart von Wasser als Komponente (a3) und optional in Gegenwart mindestens eines Katalysators (a4);
(b) Entfernung des Lösungsmittels unter Erhalt des Aerogels oder Xerogels.

Die im Rahmen von Schritt (a) vorzugsweise verwendeten Komponenten (a1) bis (a4) und die Mengenverhältnisse werden nachfolgend erläutert.

Die mehrfunktionellen Isocyanate (a1) werden im Folgenden gemeinsam als Komponente (a1) bezeichnet. Entsprechend werden die mehrfunktionellen aromatischen Amine (a2) im Folgenden gemeinsam als Komponente (a2) bezeichnet. Es ist für den Fachmann offensichtlich, dass die genannten Monomerkomponenten im organischen porösen Material in umgesetzter Form vorliegen.

Unter Funktionalität einer Verbindung soll im Rahmen der vorliegenden Erfindung die Zahl der reaktiven Gruppen pro Molekül verstanden werden. Im Fall der Monomerkomponente (a1) ist die Funktionalität die Anzahl der Isocyanatgruppen pro Molekül. Im Falle der Aminogruppen der Monomerkomponente (a2) bezeichnet die Funktionalität die Zahl der reaktiven Aminogruppen pro Molekül. Eine mehrfunktionelle Verbindung weist dabei eine Funktionalität von mindestens 2 auf.

Falls als Komponente (a1) beziehungsweise (a2) Mischungen aus Verbindungen mit unterschiedlicher Funktionalität zum Einsatz kommen, ergibt sich die Funktionalität der Komponenten jeweils aus dem zahlengewichteten Mittel der Funktionalität der einzelnen Verbindungen. Eine mehrfunktionelle Verbindung enthält mindestens zwei der oben genannten funktionellen Gruppen pro Molekül.

### Komponente (a1)

Vorzugsweise wird als Komponente (a1) mindestens ein mehrfunktionelles Isocyanat verwendet.

Im Rahmen des erfindungsgemäßen Verfahrens beträgt die eingesetzte Menge der Komponente (a1) vorzugsweise mindestens 20 Gew.-%, insbesondere mindestens 30 Gew.-%, besonders bevorzugt mindestens 40 Gew.-%, ganz besonders bevorzugt mindestens 55 Gew.-%, insbesondere mindestens 68 Gew.-%, jeweils bezogen auf das Gesamtgewicht der Komponenten (a1), (a2) und ggf. (a3), welches 100 Gew.-% ergibt. Im Rahmen des erfindungsgemäßen Verfahrens beträgt die eingesetzte Menge der Komponente (a1) außerdem vorzugsweise höchstens 99,8 Gew.-%, insbesondere höchstens 99,3 Gew.-%, besonders bevorzugt höchstens 97,5 Gew.-%, jeweils bezogen auf das Gesamtgewicht der Komponenten (a1), (a2) und ggf. (a3), welches 100 Gew.-% ergibt.

Als mehrfunktionelle Isocyanate kommen aromatische, aliphatische, cycloaliphatische und/oder araliphatische Isocyanate in Betracht. Derartige mehrfunktionelle Isocyanate sind an sich bekannt oder können nach an sich bekannten Methoden hergestellt werden. Die mehrfunktionellen Isocyanate können insbesondere auch als Mischungen eingesetzt werden, so dass die Komponente (a1) in diesem Fall verschiedene mehrfunktionelle Isocyanate enthält. Als Monomerbausteine (a1) in Betracht kommende mehrfunktionelle Isocyanate weisen zwei (im folgenden Diisocyanate genannt) oder mehr als zwei Isocyanatgruppen pro Molekül der Monomerkomponente auf.

Insbesondere geeignet sind 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyldiphenyldiisocyanat, 1,2-Diphenylethandiisocyanat und/oder p-Phenylen-diisocyanat (PPDI), Tri-, Tetra-, Penta-, Hexa-, Hepta- und/oder Octamethylendiisocyanat, 2-Methylpentamethylen-1,5-diisocyanat, 2-Ethylbutylen-1,4-diisocyanat, Pentamethylen-1,5-diisocyanat, Butylen-1,4-diisocyanat, 1-Isocyanato-3,3,5-trimethyl-5-iso-cyanatomethyl-cyclohexan (Isophorondiisocyanat, IPDI), 1,4- und/oder 1,3-Bis(iso-cyanatomethyl)cyclohexan (HXDI), 1,4-Cyclohexandiisocyanat, 1-Methyl-2,4- und/oder-2,6-cyclohexandiisocyanat und 4,4'-, 2,4'- und/oder 2,2'-Dicyclohexylmethandiisocyanat.
Als mehrfunktionelle Isocyanate (a1) sind aromatische Isocyanate bevorzugt. Dies gilt insbesondere dann, wenn als Komponente (a3) Wasser verwendet wird.

Besonders bevorzugt sind als mehrfunktionelle Isocyanate der Komponente (a1) folgende Ausführungsformen:
i) Mehrfunktionelle Isocyanate auf Basis von Toluylendiisocyanat (TDI), insbesondere 2,4-TDI oder 2,6-TDI oder Mischungen aus 2,4- und 2,6-TDI;
ii) Mehrfunktionelle Isocyanate auf Basis von Diphenylmethandiisocyanat (MDI), insbesondere 2,2'-MDI oder 2,4'-MDI oder 4,4'-MDI oder oligomeres MDI, das auch als Polyphenylpolymethylenisocyanat bezeichnet wird, oder Mischungen aus zwei oder drei der vorgenannten Diphenylmethandiisocyanate, oder Roh-MDI, welches bei der Herstellung von MDI anfällt, oder Mischungen aus mindestens einem Oligomer des MDI und mindestens einem der vorgenannten niedermolekularen MDI-Derivate;
iii) Gemische aus mindestens einem aromatischen Isocyanat gemäß Ausführungsform i) und mindestens einem aromatischen Isocyanat gemäß Ausführungsform ii).

Als mehrfunktionelles Isocyanat besonders bevorzugt ist oligomeres Diphenylmethandiisocyanat. Bei oligomerem Diphenylmethandiisocyanat (im folgenden oligomeres MDI genannt) handelt es sich um ein Gemisch aus mehreren oligomeren Kondensationsprodukten und somit Derivaten von Diphenylmethandiisocyanat (MDI). Die mehrfunktionellen Isocyanate können bevorzugt auch aus Mischungen von monomeren aromatischen Diisocyanaten und oligomerem MDI aufgebaut sein.

Oligomeres MDI enthält ein oder mehrere mehrkernige Kondensationsprodukte des MDI mit einer Funktionalität von mehr als 2, insbesondere 3 oder 4 oder 5. Oligomeres MDI ist bekannt und wird häufig als Polyphenylpolymethylenisocyanat oder auch als polymeres MDI bezeichnet. Oligomeres MDI ist üblicherweise aus einer Mischung aus MDI-basierten Isocyanaten mit unterschiedlicher Funktionalität aufgebaut. Üblicherweise wird oligomeres MDI im Gemisch mit monomerem MDI eingesetzt.

Die (mittlere) Funktionalität eines Isocyanates, welches oligomeres MDI enthält, kann im Bereich von ungefähr 2,2 bis ungefähr 5 variieren, insbesondere von 2,4 bis 3,5, insbesondere von 2,5 bis 3. Eine solche Mischung von MDI-basierten mehrfunktionellen Isocyanaten mit unterschiedlichen Funktionalitäten ist insbesondere das Roh-MDI, das bei der Herstellung von MDI, üblicherweise katalysiert durch Salzsäure, als Zwischenprodukt der Herstellung von Roh-MDI entsteht.

Mehrfunktionelle Isocyanate oder Mischungen mehrerer mehrfunktioneller Isocyanate auf Basis von MDI sind bekannt und werden beispielsweise von BASF Polyurethanes GmbH unter dem Namen Lupranat® vertrieben.

Vorzugsweise beträgt die Funktionalität der Komponente (a1) mindestens zwei, insbesondere mindestens 2,2 und besonders bevorzugt mindestens 2,4. Die Funktionalität der Komponente (a1) beträgt bevorzugt von 2,2 bis 4 und besonders bevorzugt von 2,4 bis 3.

Vorzugsweise beträgt der Gehalt an Isocyanatgruppen der Komponente (a1) von 5 bis 10 mmol/g, insbesondere von 6 bis 9 mmol/g, besonders bevorzugt von 7 bis 8,5 mmol/g. Dem Fachmann ist bekannt, dass der Gehalt an Isocyanatgruppen in mmol/g und das sogenannte Äquivalenzgewicht in g/Äquivalent in einem reziproken Verhältnis stehen. Der Gehalt an Isocyanatgruppen in mmol/g ergibt sich aus dem Gehalt in Gew.-% nach ASTM D-5155-96 A.

In einer bevorzugten Ausführungsform besteht die Komponente (a1) aus mindestens einem mehrfunktionellen Isocyanat ausgewählt aus Diphenylmethan-4,4'-diisocyanat, Diphenylmethan-2,4'-diisocyanat, Diphenylmethan-2,2'-diisocyanat und oligomerem Diphenylmethandiisocyanat. Im Rahmen dieser bevorzugten Ausführungsform enthält die Komponente (a1) besonders bevorzugt oligomeres Diphenylmethandiisocyanat und weist eine Funktionalität von mindestens 2,4 auf.

Die Viskosität der eingesetzten Komponente (a1) kann in einem weiten Bereich variieren. Vorzugsweise weist die Komponente (a1) eine Viskosität von 100 bis 3000 mPa.s, besonders bevorzugt von 200 bis 2500 mPa.s, auf.

### Komponente (a2)

Im Rahmen des erfindungsgemäß bevorzugten Verfahrens ist Komponente (a2) mindestens ein mehrfunktionelles aromatisches Amin.

Komponente (a2) kann teilweise in situ erzeugt werden. In einer solchen Ausführungsform wird die Umsetzung im Rahmen von Schritt (a) in Gegenwart von Wasser (a3) durchgeführt. Wasser reagiert mit den Isocyanatgruppen zu Aminogruppen unter Freisetzung von CO₂. Somit werden mehrfunktionelle Amine teilweise als Zwischenprodukt (in situ) erzeugt. Sie werden im weiteren Verlauf der Umsetzung mit Isocyanatgruppen zu Harnstoffverknüpfungen umgesetzt.

In dieser bevorzugten Ausführungsform wird die Umsetzung in Gegenwart von Wasser (a3) und einem mehrfunktionellen aromatischen Amin als Komponente (a2) sowie optional in Gegenwart eines Katalysators (a4) durchgeführt.

In einer weiteren, ebenfalls bevorzugten Ausführungsform wird die Umsetzung von Komponente (a1) und einem mehrfunktionellen aromatischen Amin als Komponente (a2) optional in Gegenwart eines Katalysators (a4) durchgeführt. Dabei ist kein Wasser (a3) anwesend.

Mehrfunktionelle aromatische Amine sind dem Fachmann an sich bekannt. Unter mehrfunktionellen Aminen sind solche zu verstehen, welche mindestens zwei gegenüber Isocyanaten reaktive Aminogruppen pro Molekül aufweisen. Gegenüber Isocyanaten reaktiv sind dabei primäre und sekundäre Aminogruppen, wobei die Reaktivität der primären Aminogruppen im Allgemeinen deutlich höher ist als die der sekundären.

Die mehrfunktionellen aromatischen Amine sind vorzugsweise zweikernige aromatische Verbindungen mit zwei primären Aminogruppen (bifunktionelle aromatische Amine), entsprechende drei - oder mehrkernige aromatische Verbindungen mit mehr als zwei primären Aminogruppen oder Mischungen aus den vorgenannten Verbindungen. Bevorzugte mehrfunktionelle aromatische Amine der Komponente (a2) sind insbesondere Isomere und Derivate von Diaminodiphenylmethan.

Die genannten bifunktionellen zweikernigen aromatischen Amine sind besonders bevorzugt solche gemäß der allgemeinen Formel I, 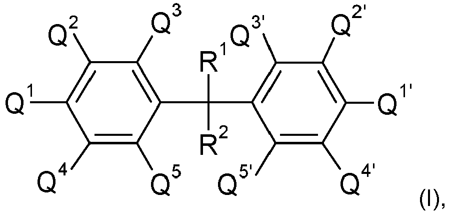 wobei R¹ und R² gleich oder unterschiedlich sein können und unabhängig voneinander ausgewählt werden aus Wasserstoff und linearen oder verzweigten Alkylgruppen mit von 1 bis 6 Kohlenstoffatomen und wobei sämtliche Substituenten Q¹ bis Q⁵ und Q^{1'} bis Q^{5'} gleich oder unterschiedlich sind und unabhängig voneinander ausgewählt werden aus Wasserstoff, einer primären Aminogruppe und einer linearen oder verzweigten Alkylgruppe mit von 1 bis 12 Kohlenstoffatomen, wobei die Alkylgruppe weitere funktionelle Gruppen tragen kann, unter der Voraussetzung, dass die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q^{1'}, Q^{3'} und Q^{5'} eine primäre Aminogruppe ist.

In einer Ausführungsform werden die Alkylgruppen im Rahmen der Substituenten Q gemäß der allgemeinen Formel I ausgewählt aus Methyl, Ethyl, n-Propyl, iso-Propyl, n-Butyl, sek-Butyl und tert-Butyl. Derartige Verbindungen werden nachfolgende als substituierte aromatische Amine (a2-s) bezeichnet. Allerdings ist es ebenfalls bevorzugt, wenn alle Substituenten Q Wasserstoff darstellen, sofern sie nicht wie oben definiert Aminogruppen sind (sogenannte nicht substituierte mehrfunktionelle aromatische Amine).

Bevorzugt sind R¹ und R² im Rahmen der allgemeinen Formel I gleich oder unterschiedlich und werden unabhängig voneinander ausgewählt aus Wasserstoff, einer primären Aminogruppe und einer linearen oder verzweigten Alkylgruppe mit von 1 bis 6 Kohlenstoffatomen. Vorzugsweise werden R¹ und R² ausgewählt aus Wasserstoff und Methyl. Besonders bevorzugt gilt R¹ = R² = H.

Geeignete mehrfunktionelle aromatische Amine (a2) sind außerdem insbesondere Isomere und Derivate von Toluoldiamin. Im Rahmen von Komponente (a2) bevorzugte Isomere und Derivate von Toluoldiamin sind insbesondere Toluol-2,4-diamin und/oder Toluol-2,6-diamin und Diethyltoluoldiamine, insbesondere 3,5-Diethyltoluol-2,4-diamin und/oder 3,5-Diethyltoluol-2,6-diamin.

Ganz besonders bevorzugt umfasst Komponente (a2) mindestens ein mehrfunktionelles aromatisches Amin ausgewählt aus 4,4'-Diaminodiphenylmethan, 2,4'-Diaminodiphenylmethan, 2,2'-Diaminodiphenylmethan und oligomerem Diaminodiphenylmethan.

Oligomeres Diaminodiphenylmethan enthält ein oder mehrere mehrkernige Methylen-verbrückte Kondensationsprodukte von Anilin und Formaldehyd. Oligomeres MDA enthält mindestens ein, im Allgemeinen jedoch mehrere Oligomere des MDA mit einer Funktionalität von mehr als 2, insbesondere 3 oder 4 oder 5. Oligomeres MDA ist bekannt oder kann nach an sich bekannten Methoden hergestellt werden. Üblicherweise wird oligomeres MDA in Form von Mischungen mit monomerem MDA eingesetzt.

Die (mittlere) Funktionalität eines mehrfunktionellen Amins der Komponente (a2), welches oligomeres MDA enthält, kann im Bereich von ungefähr 2,3 bis ungefähr 5 variieren, insbesondere von 2,3 bis 3,5 und insbesondere von 2,3 bis 3. Eine solche Mischung von MDA-basierten mehrfunktionellen Aminen mit unterschiedlichen Funktionalitäten ist insbesondere das Roh-MDA, das insbesondere bei der Kondensation von Anilin mit Formaldehyd, üblicherweise katalysiert durch Salzsäure, als Zwischenprodukt der Herstellung von Roh-MDI entsteht.

Besonders bevorzugt enthält das mindestens eine mehrfunktionelle aromatische Amin Diaminodiphenylmethan oder ein Derivat von Diaminodiphenylmethan. Besonders bevorzugt enthält das mindestens eine mehrfunktionelle aromatische Amin oligomeres Diaminodiphenylmethan. Besonders bevorzugt ist, wenn die Komponente (a2) oligomeres Diaminodiphenylmethan als Verbindung (a2) enthält und insgesamt eine Funktionalität von mindestens 2,1 aufweist. Insbesondere enthält die Komponente (a2) oligomeres Diaminodiphenylmethan und weist eine Funktionalität von mindestens 2,4 auf.

Es ist im Rahmen der vorliegenden Erfindung möglich, die Reaktivität der primären Aminogruppen zu steuern, indem substituierte mehrfunktionelle aromatische Amine im Rahmen von Komponente (a2) verwendet werden. Die genannten und nachfolgend ausgeführten substituierten mehrfunktionellen aromatischen Amine, nachfolgend mit (a2-s) bezeichnet, können in Mischung mit den oben genannten (nicht substituierten) Diaminodiphenylmethanen (alle Q in Formel I Wasserstoff, sofern nicht NH₂) oder auch ausschließlich eingesetzt werden.

In dieser Ausführungsform wird Q², Q⁴, Q^{2'} und Q^{4'} im Rahmen der oben dargestellten Formel I einschließlich den dazugehörigen Definitionen vorzugsweise so gewählt, dass die Verbindung gemäß der allgemeinen Formel I mindestens eine lineare oder verzweigte Alkylgruppe, die weitere funktionelle Gruppen tragen kann, mit von 1 bis 12 Kohlenstoffatomen in α-Position zu mindestens einer an den aromatischen Kern gebundenen primären Aminogruppe aufweist. Vorzugsweise werden Q², Q⁴, Q^{2'} und Q^{4'} in dieser Ausführungsform so gewählt, dass das substituierte aromatische Amin (a2-s) mindestens zwei primäre Aminogruppen umfasst, die jeweils eine oder zwei lineare oder verzweigte Alkylgruppen mit von 1 bis 12 Kohlenstoffatomen in α-Position aufweisen, die weitere funktionelle Gruppen tragen können. Sofern eines oder mehrere aus Q², Q⁴, Q^{2'} und Q^{4'} so gewählt werden, dass sie lineare oder verzweigte Alkylgruppen mit von 1 bis 12 Kohlenstoffatomen entsprechen, die weitere funktionelle Gruppen tragen, dann sind Aminogrupppen und/oder Hydroxygruppen und/oder Halogenatome als solche funktionelle Gruppen bevorzugt.

Vorzugsweise werden die Amine (a2-s) ausgewählt aus der Gruppe bestehend aus 3,3',5,5'-Tetraalkyl-4,4'-diaminodiphenylmethan, 3,3',5,5'-Tetraalkyl-2,2'-diaminodiphenylmethan und 3,3',5,5'-Tetraalkyl-2,4'-diaminodiphenylmethan, wobei die Alkylgruppen in 3,3',5 und 5'-Position gleich oder unterschiedlich sein können und unabhängig voneinander ausgewählt werden aus linearen oder verzweigten Alkylgruppen mit von 1 bis 12 Kohlenstoffatomen, die weitere funktionelle Gruppen tragen können. Vorzugsweise sind vorgenannte Alkylgruppen Methyl, Ethyl, n-Propyl, i-Propyl, n-Butyl, sek-Butyl oder t-Butyl (jeweils unsubstituiert).

In einer Ausführungsform können eines, mehrere oder alle Wasserstoffatome einer oder mehrerer Alkylgruppen der Substituenten Q durch Halogenatome, insbesondere Chlor, ersetzt sein. Alternativ können eines, mehrere oder alle Wasserstoffatome einer oder mehrerer Alkylgruppen der Substituenten Q durch NH₂ oder OH ersetzt sein. Es ist jedoch bevorzugt, wenn die Alkylgruppen im Rahmen der allgemeinen Formel I aus Kohlenstoff und Wasserstoff aufgebaut sind.
In einer besonders bevorzugten Ausführungsform umfasst Komponente (a2-s) 3,3',5,5'-Tetraalkyl-4,4'-diaminodiphenylmethan, wobei die Alkylgruppen gleich oder unterschiedlich sein können und unabhängig ausgewählt werden aus linearen oder verzweigten Alkylgruppen mit von 1 bis 12 Kohlenstoffatomen, die optional funktionelle Gruppen tragen können. Vorzugsweise werden vorgenannte Alkylgruppen ausgewählt aus unsubstituierten Alkylgruppen, insbesondere Methyl, Ethyl, n-Propyl, iso-Propyl, n-Butyl, sek-Butyl und tert-Butyl, besonders bevorzugt aus Methyl und Ethyl. Ganz besonders bevorzugt sind 3,3',5,5'-Tetraethyl-4,4'-diaminodiphenylmethan und/oder 3,3',5,5'-Tetramethyl-4,4'-diaminodiphenylmethan.

Die vorgenannten mehrfunktionellen Amine der Komponente (a2) sind dem Fachmann an sich bekannt oder können nach bekannten Methoden hergestellt werden. Eine der bekannten Methoden ist die Umsetzung von Anilin beziehungsweise von Derivaten des Anilins mit Formaldehyd unter saurer Katalyse.

Wie oben erläutert, kann Wasser als Komponente (a3) teilweise das mehrfunktionelle aromatische Amin ersetzen, indem es mit einer dann vorab berechneten Menge an zusätzlichem mehrfunktionellen aromatischem Isocyanat der Komponente (a1) in situ zu einem entsprechenden mehrfunktionellen aromatischen Amin reagiert.

Sofern als Komponente (a3) Wasser verwendet wird, sind wie nachfolgend ausgeführt vorzugsweise bestimmte Randbedingungen einzuhalten.

Wie bereits oben ausgeführt, reagiert Wasser mit den Isocyanatgruppen zu Aminogruppen unter Freisetzung von CO₂. Somit werden mehrfunktionelle Amine teilweise als Zwischenprodukt (in situ) erzeugt. Sie werden im weiteren Verlauf der Umsetzung mit Isocyanatgruppen zu Harnstoffverknüpfungen umgesetzt. Die Erzeugung von Aminen als Zwischenprodukt führt zu porösen Materialien mit hoher mechanischer Stabilität und geringer Wärmeleitfähigkeit. Das gebildete CO₂ darf die Gelierung jedoch nicht so stark stören, dass die Struktur des resultierenden porösen Materials in unerwünschter Weise beeinflusst wird. Hieraus ergibt sich die oben ausgeführte bevorzugte Obergrenze für den Wassergehalt bezogen auf das Gesamtgewicht der Komponenten (a1) bis (a3), der vorzugsweise höchstens 30 Gew.-%, besonders bevorzugt höchstens 25 Gew.-%, insbesondere höchstens 20 Gew.-% beträgt. Ein Wassergehalt in diesem Bereich führt darüber hinaus zu dem Vorteil, dass etwaiges Restwasser nach erfolgter Gelierung nicht aufwendig durch Trocknung entfernt werden muss.

Sofern als Komponente (a3) Wasser eingesetzt wird, beträgt die bevorzugt eingesetzte Menge Wasser von 0,1 bis 30 Gew.-%, insbesondere von 0,2 bis 25 Gew.-%, besonders bevorzugt von 0,5 bis 20 Gew.-%, jeweils bezogen auf das Gesamtgewicht der Komponenten (a1) bis (a3), welches 100 Gew.-% ergibt.

Die bevorzugte Menge Wasser ist innerhalb der dargelegten Bereiche davon abhängig, ob ein Katalysator (a4) verwendet wird oder nicht.

In einer ersten Variante, welche die Verwendung von Wasser umfasst, erfolgt die Umsetzung der Komponenten (a1) bis (a3) ohne die Anwesenheit eines Katalysators (a4). In dieser ersten Ausführungsform hat es sich als vorteilhaft herausgestellt, von 5 bis 30 Gew.-%, insbesondere von 6 bis 25 Gew.-%, besonders bevorzugt von 8 bis 20 Gew.-% Wasser als Komponente (a3) jeweils bezogen auf das Gesamtgewicht der Komponenten (a1) bis (a3), welches 100 Gew.-% ergibt, einzusetzen.

Im Rahmen dieser ersten Ausführungsform werden die vorgenannten Komponenten (a1) bis (a3) vorzugsweise in folgendem Verhältnis eingesetzt, jeweils bezogen auf das Gesamtgewicht der Komponenten (a1) bis (a3), welches 100 Gew.-% ergibt: von 40 bis 94,9 Gew.-%, insbesondere von 55 bis 93,5 Gew.-%, besonders bevorzugt von 68 bis 90 Gew.-% der Komponente (a1), von 0,1 bis 30 Gew.-%, insbesondere von 0,5 bis 20 Gew.-%, besonders bevorzugt von 2 bis 12 Gew.-% mehrfunktionelle aromatische Amine (a2) und von 5 bis 30 Gew.-%, insbesondere von 6 bis 25, besonders bevorzugt von 8 bis 20 Gew.-% Wasser (a3).

Aus dem Wassergehalt und dem Gehalt reaktiver Isocyanatgruppen der Komponente (a1) ergibt sich ein rechnerischer Gehalt an Aminogruppen, indem man von einer vollständigen Umsetzung des Wassers mit den Isocyanatgruppen der Komponente (a1) unter Bildung einer entsprechenden Menge Aminogruppen ausgeht und diesen Gehalt zum Gehalt resultierend aus Komponente (a2) addiert (insgesamt n^{Amin}). Das hieraus resultierende Einsatzverhältnis der rechnerisch verbleibenden NCO-Gruppen n^{NCO} im Verhältnis zu den rechnerisch gebildeten sowie eingesetzten Aminogruppen wird nachfolgend als rechnerisches Einsatz-Verhältnis n^{NCO}/n^{Amin} bezeichnet und ist ein Äquivalenzverhältnis, d. h. ein molares Verhältnis der jeweiligen funktionellen Gruppen.

Im Rahmen der vorstehend genannten ersten Variante kann das rechnerische Einsatz-Verhältnis (Äquivalenzverhältnis) n^{NCO}/n^{Amin} über einen weiten Bereich variieren und insbesondere von 0,6 bis 5 betragen. n^{NCO}/n^{Amin} beträgt vorzugsweise von 1 bis 1,6, insbesondere von 1,1 bis 1,4.

In einer zweiten, bevorzugten Variante, welche die Verwendung von Wasser umfasst, erfolgt die Umsetzung der Komponenten (a1) bis (a3) in Anwesenheit eines Katalysators (a4). In dieser zweiten Ausführungsform hat es sich als vorteilhaft herausgestellt, von 0,1 bis 15 Gew.-%, insbesondere von 0,2 bis 15 Gew.-%, besonders bevorzugt von 0,5 bis 12 Gew.-% Wasser (a3), jeweils bezogen auf das Gesamtgewicht der Komponenten (a1) bis (a3), welches 100 Gew.-% ergibt, einzusetzen. In den vorgenannten Bereichen ergeben sich besonders günstige mechanische Eigenschaften der resultierenden porösen Materialien, was durch eine besonders günstige Netzwerkstruktur begründet ist. Eine höhere Menge an Wasser wirkt sich negativ auf die Netzwerkstruktur aus und ist in Bezug auf die Endeigenschaften des porösen Materials von Nachteil.

Im Rahmen der bevorzugten zweiten Variante werden die vorgenannten Komponenten (a1) bis (a3) vorzugsweise in folgendem Verhältnis eingesetzt, jeweils bezogen auf das Gesamtgewicht der Komponenten (a1) bis (a3), welches 100 Gew.-% ergibt: von 55 bis 99,8 Gew.-%, insbesondere von 65 bis 99, 3 Gew.-%, besonders bevorzugt von 76 bis 97,5 Gew.-% der Komponente (a1), von 0,1 bis 30 Gew.-%, insbesondere von 0,5 bis 20 Gew.-%, besonders bevorzugt von 2 bis 12 Gew.-% mehrfunktionelles aromatisches Amin (a2) und von 0,1 bis 15 Gew.-%, insbesondere von 0,2 bis 15, besonders bevorzugt von 0,5 bis 12 Gew.-% Wasser (a3).

Gemäß der vorstehend genannten zweiten Variante beträgt das rechnerische Einsatz-Verhältnis (Äquivalenzverhältnis) n^{NCO}/n^{Amin} bevorzugt von 1,01 bis 5. Besonders bevorzugt beträgt das genannte Äquivalenzverhältnis von 1,1 bis 3, insbesondere von 1,1 bis 2. Ein Überschuss n^{NCO} gegenüber n^{Amin} führt in dieser Ausführungsform zu einer geringeren Schrumpfung des porösen Materials, insbesondere Xerogel, bei der Entfernung des Lösungsmittels sowie durch synergistische Zusammenwirkung mit dem Katalysator (a4) zu einer verbesserten Netzwerkstruktur und zu verbesserten Endeigenschaften des resultierenden porösen Materials.

In der bereits oben erläuterten zweiten bevorzugten Ausführungsform erfolgt die Umsetzung gemäß Schritt (a) in Abwesenheit von Wasser (a3). Im Rahmen dieser bevorzugten Ausführungsform werden die oben ausgeführten Komponenten (a1) und (a2) vorzugsweise in folgendem Verhältnis eingesetzt, jeweils bezogen auf das Gesamtgewicht der Komponenten (a1) und (a2), welches 100 Gew.-% ergibt: von 20 bis 80 Gew.-%, insbesondere von 25 bis 75 Gew.-%, besonders bevorzugt von 35 bis 68 Gew.-% der Komponente (a1), von 20 bis 80 Gew.-%, insbesondere von 25 bis 75 Gew.-%, besonders bevorzugt von 32 bis 65 Gew.-% Komponente (a2); kein (a3).

Im Rahmen dieser vorstehend ausgeführten Ausführungsform beträgt das Einsatz-Verhältnis (Äquivalenzverhältnis) n^{NCO}/n^{Amin} bevorzugt von 1,01 bis 5. Besonders bevorzugt beträgt das genannte Äquivalenzverhältnis von 1,1 bis 3, insbesondere von 1,1 bis 2. Ein Überschuss n^{NCO} gegenüber n^{Amin} führt auch in dieser Ausführungsform zu einer geringeren Schrumpfung des porösen Materials, insbesondere Xerogel, bei der Entfernung des Lösungsmittels sowie durch synergistische Zusammenwirkung mit dem Katalysator (a4) zu einer verbesserten Netzwerkstruktur und zu verbesserten Endeigenschaften des resultierenden porösen Materials.

Die Komponenten (a1) bis (a3) werden nachfolgend gemeinsam als organische Gelvorstufe (A) bezeichnet.

### Katalysator (a4)

In einer bevorzugten Ausführungsform wird das erfindungsgemäße Verfahren vorzugsweise in Gegenwart mindestens eines Katalysators als Komponente (a4) durchgeführt.

Als Katalysatoren kommen im Prinzip alle dem Fachmann bekannten Katalysatoren in Betracht, welche die Trimerisierung von Isocyanaten (sogenannte Trimerisierungskatalysatoren) und/oder die Umsetzung von Isocyanaten mit Aminogruppen (sogenannte Gelkatalysatoren) und/odersofern Wasser verwendet wird - die Umsetzung von Isocyanaten mit Wasser (sogenannte Treibkatalysatoren) beschleunigen.

Die entsprechenden Katalysatoren sind an sich bekannt und weisen unterschiedliche Ausprägungen hinsichtlich der oben genannten drei Reaktionen auf. Je nach Ausprägung können sie somit ein oder mehrerer der vorgenannten Typen zugeordnet werden. Dem Fachmann ist darüber hinaus bekannt, dass auch andere Reaktionen als die oben genannten auftreten können.

Entsprechende Katalysatoren lassen sich unter anderem anhand ihres Gel- zu Treibverhältnisses charakterisieren, wie z.B. bekannt aus Polyurethane, 3. Auflage, G. Oertel, Hanser Verlag, München, 1993, Seiten 104 bis 110.

Sofern keine Komponente (a3), d. h. kein Wasser verwendet wird, weisen bevorzugte Katalysatoren eine signifikante Aktivität hinsichtlich der Trimerisierung auf. Hierdurch wird die Homogenität der Netzwerkstruktur günstig beeinflusst, woraus besonders günstige mechanische Eigenschaften resultieren

Sofern Wasser als Komponente (a3) verwendet wird, weisen bevorzugte Katalysatoren (a4) ein ausgewogenes Gel- zu Treibverhältnis auf, so dass die Reaktion der Komponente (a1) mit Wasser nicht zu stark beschleunigt wird und zu einer negativen Beeinflussung der Netzwerkstruktur führt und gleichzeitig eine kurze Gelierungszeit resultiert, so dass die Entformungszeit vorteilhaft gering ist. Bevorzugte Katalysatoren weisen gleichzeitig eine signifikante Aktivität hinsichtlich der Trimerisierung auf. Hierdurch wird die Homogenität der Netzwerkstruktur günstig beeinflusst, woraus besonders günstige mechanische Eigenschaften resultieren.

Die Katalysatoren können ein Monomerbaustein (einbaubarer Katalysator) oder nicht-einbaubar sein.

Die Komponente (a4) wird zweckmäßigerweise in der geringsten wirksamen Menge eingesetzt. Vorzugsweise Anwendung finden Mengen von 0,01 bis 5 Gew.-teile, insbesondere von 0,1 bis 3 Gew.- teile, besonders bevorzugt von 0,2 bis 2,5 Gew.- teile der Komponente (a4) bezogen auf insgesamt 100 Gew.-teile der Komponenten (a1), (a2) und (a3).

Im Rahmen von Komponente (a4) bevorzugte Katalysatoren werden ausgewählt aus der Gruppe bestehend aus primären, sekundären und tertiären Aminen, Triazinderivaten, Organometallverbindungen, Metallchelaten, quaternäre Ammoniumsalzen, Ammoniumhydroxiden sowie Alkali- und Erdalkali-Hydroxiden, -alkoxiden und -carboxylaten.

Geeignete Katalysatoren sind insbesondere starke Basen, beispielsweise quaternäre Ammoniumhydroxide, wie z. B. Tetraalkylammoniumhydroxide mit 1 bis 4 C-Atomen im Alkylrest und Benzyltrimethylammoniumhydroxid, Alkalimetallhydroxide, wie z. B. Kalium- oder Natriumhydroxid und Alkalimetallalkoxide, wie z. B. Natriummethylat, Kalium- und Natriumethylat und Kaliumisopropylat.

Geeignete Katalysatoren sind außerdem insbesondere Alkalimetallsalze von Carbonsäuren, wie z. B. Kaliumformiat, Natrium-, Kaliumacetat, Kalium-2-ethylhexanoat, Kaliumadipat und Natriumbenzoat, Alkalisalze von langkettigen Fettsäuren mit 8 bis 20, insbesondere 10 bis 20 C-Atomen und gegebenenfalls seitenständigen OH-Gruppen.

Geeignete Katalysatoren sind außerdem insbesondere N-Hydroxyalkyl-quarternärammoniumcarboxylate, wie z.B. Trimethylhydroxypropylammoniumformiat.

Organometallverbindungen sind dem Fachmann insbesondere als Gelkatalysatoren an sich bekannt und sind als Katalysatoren (a4) ebenfalls geeignet. Organozinnverbindungen wie z.B. Zinn-2-ethylhexanoate und Dibutylzinndilaurate sind im Rahmen von Komponente (a4) bevorzugt. Weiterhin sind Metall-Acetylacetonate bevorzugt, insbesondere Zinkacetylacetonat. Tertiäre Amine sind dem Fachmann als Gelkatalysatoren und als Trimerisierungskatalysatoren an sich bekannt. Tertiäre Amine sind als Katalysatoren (a4) besonders bevorzugt. Bevorzugte tertiäre Amine sind insbesondere N,N-Dimethylbenzylamin, N,N'-Dimethylpiperazin, N,N-Dimethylcyclohexylamin, N,N',N"-Tris-(dialkylaminoalkyl)-s-hexahydrotriazine, wie z. B. N,N',N"-Tris(dimethylaminopropyl)-s-hexahydrotriazin, Tris-(dimethylaminomethyl)phenol, Bis(2-dimethylaminoethyl)ether, N,N,N,N,N-Pentamethyldiethylentriamin, Methylimidazol, Dimethylimidazol, Dimethylbenzylamin, 1,6-Diazabicyclo-5,4,0-undecen-7, Triethylamin, Triethylendiamin (IUPAC: 1,4-Diazabicyclo[2,2,2]octan), Dimethylaminoethanolamin, Dimethylaminopropylamin, N,N-Dimethylaminoethoxyethanol, N,N,N-Trimethylaminoethylethanolamin, Triethanolamin, Diethanolamin, Triisopropanolamin und Diisopropanolamin.

Im Rahmen von Komponente (a4) besonders bevorzugte Katalysatoren werden ausgewählt aus der Gruppe bestehend aus N,N-Dimethylcyclohexylamin, Bis(2-dimethylaminoethyl)ether, N,N,N,N,N-Pentamethyldiethylentriamin, Methylimidazol, Dimethylimidazol, Dimethylbenzylamin, 1,6-Diazabicyclo-[5,4,0]-undecen-7, Tris-dimethylaminopropylhexahydrotriazin, Triethylamin, Tris-(dimethylaminomethyl)phenol, Triethylendiamin (Diazabicyclo[2,2,2]octan), Dimethylaminoethanolamin, Dimethylaminopropylamin, N,N-Dimethylaminoethoxyethanol, N,N,N-Trimethylaminoethylethanolamin, Triethanolamin, Diethanolamin, Triisopropanolamin, Diisopropanolamin, Metall-Acetylacetonate, Ammonium-Ethylhexanoate und Metallionen-Ethylhexanoate.

Die Verwendung der im Rahmen der vorliegenden Erfindung bevorzugten Katalysatoren (a4) führt zu porösen Materialien mit verbesserten mechanischen Eigenschaften, insbesonders zu verbesserter Druckfestigkeit. Darüber hinaus wird durch Verwendung der Katalysatoren (a4) die Gelierungszeit verringert, d. h. die Gelierungsreaktion beschleunigt, ohne andere Eigenschaften negativ zu beeinflussen.

### Lösungsmittel

Die Herstellung der erfindungsgemäß verwendeten organischen Aerogele oder Xerogele findet in Gegenwart eines Lösungsmittels statt.

Der Begriff Lösungsmittel umfasst im Rahmen der vorliegenden Erfindung flüssige Verdünnungsmittel, das heißt sowohl Lösungsmittel im engeren Sinne als auch Dispersionsmittel. Die Mischung kann insbesondere eine echte Lösung, eine kolloidale Lösung oder eine Dispersion, z.B. eine Emulsion oder Suspension, sein. Bevorzugt ist die Mischung eine echte Lösung. Das Lösungsmittel ist eine unter den Bedingungen des Schrittes (a) flüssige Verbindung, vorzugsweise ein organisches Lösungsmittel.

Als Lösungsmittel kommen prinzipiell eine organische Verbindung oder ein Gemisch aus mehreren Verbindungen in Betracht, wobei das Lösungsmittel bei den Temperatur- und Druckbedingungen, unter denen die Mischung bereitgestellt wird (kurz: Lösungsbedingungen), flüssig ist. Die Zusammensetzung des Lösungsmittels wird so gewählt, dass es in der Lage ist, die organische Gelvorstufe zu lösen oder zu dispergieren, bevorzugt zu lösen. Im Rahmen des oben ausgeführten bevorzugten Verfahrens zur Herstellung der organischen Aerogele oder organischen Xerogele bevorzugte Lösungsmittel sind solche, die ein Lösungsmittel für die organische Gelvorstufe (A) sind, d. h. solche, die die organische Gelvorstufe (A) unter Reaktionsbedingungen vollständig lösen.

Das Reaktionsprodukt der Umsetzung in Gegenwart des Lösungsmittels ist zunächst ein Gel, d. h. ein viskoelastisches chemisches Netzwerk, das durch das Lösungsmittel gequollen ist. Ein Lösungsmittel, welches ein gutes Quellmittel für das gebildete Netzwerk darstellt, führt in der Regel zu einem Netzwerk mit feinen Poren und kleinem mittleren Porendurchmesser, wohingegen ein Lösungsmittel, welches ein schlechtes Quellmittel für das resultierende Gel darstellt, in der Regel zu einem grobporigen Netzwerk mit großem mittleren Porendurchmesser führt.

Die Wahl des Lösungsmittels beeinflusst somit die angestrebte Porengrößenverteilung und die angestrebte Porosität. Die Wahl des Lösungsmittels erfolgt im Allgemeinen zudem so, dass ein Ausfällen oder Ausflocken durch Bildung eines präzipitierten Reaktionsproduktes während oder nach Schritt (a) des erfindungsgemäßen Verfahrens weitestgehend nicht auftritt.

Bei Wahl eines geeigneten Lösungsmittels ist der Anteil an präzipitiertem Reaktionsprodukt üblicherweise kleiner als 1 Gew.-%, bezogen auf das Gesamtgewicht der Mischung. Die Menge an gebildetem präzipitiertem Produkt in einem bestimmten Lösungsmittel kann gravimetrisch bestimmt werden, indem die Reaktionsmischung vor dem Gelpunkt über ein geeignetes Filter filtriert wird.

Als Lösungsmittel kommen die aus dem Stand der Technik bekannten Lösungsmittel für Isocyanat-basierte Polymere in Frage. Bevorzugte Lösungsmittel sind dabei solche, die ein Lösungsmittel für die Komponenten (a1), (a2) und ggf. (a3) sind, d. h. solche, die die Bestandteile der Komponenten (a1), (a2) und ggf. (a3) unter Reaktionsbedingungen weitgehend vollständig lösen. Bevorzugt ist das Lösungsmittel gegenüber Komponente (a1) inert, d. h. nicht reaktiv.

Als Lösungsmittel kommen beispielsweise Ketone, Aldehyde, Alkylalkanoate, Amide wie Formamid und N-Methylpyrollidon, Sulfoxide wie Dimethylsulfoxid, aliphatische und cycloaliphatische halogenierte Kohlenwasserstoffe, halogenierte aromatische Verbindungen und fluorhaltige Ether in Betracht. Ebenso in Betracht kommen Mischungen aus zwei oder mehreren der vorgenannten Verbindungen.

Weiterhin kommen Acetale, insbesondere Diethoxymethan, Dimethoxymethan und 1,3-Dioxolan, als Lösungsmittel in Betracht.

Dialkylether und zyklische Ether sind als Lösungsmittel ebenfalls geeignet. Bevorzugte Dialkylether sind insbesondere solche mit 2 bis 6 Kohlenstoffatomen, insbesondere Methyl-Ethylether, Diethylether, Methyl-Propylether, Methyl-Isopropylether, Propyl-Ethylether, Ethyl-Isopropylether, Dipropylether, Propyl-Isopropylether, Diisopropylether, Methyl-Butylether, Methyl-Isobutylether, Methyl-t-Butylether, Ethyl-n-Butylether, Ethyl-Isobutylether und Ethyl-t-Butylether. Bevorzugte zyklische Ether sind insbesondere Tetrahydrofuran, Dioxan und Tetrahydropyran.

Als Lösungsmittel sind außerdem Alkylalkanoate bevorzugt, insbesondere Methylformiat, Methylacetat, Ethylformiat, Butylacetat und Ethylacetat. Bevorzugte halogenierte Lösungsmittel sind in der WO 00/24799, Seite 4, Zeile 12 bis Seite 5, Zeile 4 beschrieben.

Aldehyde und/oder Ketone sind als Lösungsmittel bevorzugt. Als Lösungsmittel geeignete Aldehyde oder Ketone sind insbesondere solche entsprechend der allgemeinen Formel R²-(CO)-R¹, wobei R¹ und R² Wasserstoff oder Alkylgruppen mit 1,2,3 oder 4 Kohlenstoffatomen sind. Geeignete Aldehyde oder Ketone sind insbesondere Acetaldehyd, Propionaldehyd, n-Butyraldehyd, Isobutyraldehyd, 2-Ethylbutyraldehyd, Valeraldehyd, Isopentaldehyd, 2-Methylpentaldehyd, 2-Ethylhexaldehyde, Acrolein, Methacrolein, Crotonaldehyd, Furfural, Acroleindimer, Methacroleindimer, 1,2,3,6-Tetrahydrobenzaldehyd, 6-Methyl-3-cyclohexenaldehyd, Cyanacetaldehyd, Glyoxylsäureethylester, Benzaldehyd, Aceton, Diethylketon, Methylethylketon, Methylisobutylketon, Methyl-n-butylketon, Ethylisopropylketon, 2-Acetylfuran, 2-Methoxy-4-methylpentan-2-on, Cyclohexanon und Acetophenon. Die vorgenannten Aldehyde und Ketone können auch in Form von Mischungen eingesetzt werden. Ketone und Aldehyde mit Alkylgruppen mit bis zu 3 Kohlenstoffatomen pro Substituent sind als Lösungsmittel besonders bevorzugt. Ganz besonders bevorzugt sind Ketone der allgemeinen Formel R¹(CO)R², wobei R¹ und R² unabhängig voneinander ausgewählt werden aus Alkylgruppen mit 1 bis 3 C-Atomen. In einer ersten bevorzugten Ausführungsform ist das Keton Aceton. In einer weiteren bevorzugten Ausführungsform umfasst mindestens einer der beiden Substituenten R¹ und/oder R² eine Alkylgruppe mit mindestens 2 Kohlenstoffatomen, insbesondere Methylethylketon. Durch Verwendung der vorgenannten besonders bevorzugten Ketone in Kombination mit dem erfindungsgemäßen Verfahren werden poröse Materialien mit besonders kleinem mittlerem Porendurchmesser erhalten. Ohne sich beschränken zu wollen besteht die Vorstellung, dass die Porenstruktur des entstehenden Gels aufgrund der höheren Affinität der vorgenannten besonders bevorzugten Ketone besonders feinporig ist.

In vielen Fällen ergeben sich besonders geeignete Lösungsmittel, indem man zwei oder mehrere miteinander vollständig mischbare Verbindungen, ausgewählt aus den vorgenannten Lösungsmitteln, in Form eines Gemisches einsetzt.

Um in Schritt (a) ein ausreichend stabiles Gel zu erhalten, das bei der Trocknung in Schritt (b) nicht stark schrumpft, darf der Anteil der Komponenten (a1) bis (a3) am Gesamtgewicht der Komponenten (a1) bis (a3) und dem Lösungsmittel, welches 100 Gew.-% ergibt, im Allgemeinen nicht weniger als 5 Gew.-% betragen. Bevorzugt beträgt der Anteil der Komponenten (a1) bis (a3) am Gesamtgewicht der Komponenten (a1) bis (a3) und dem Lösungsmittel, welches 100 Gew.-% ergibt, mindestens 6 Gew.-%, besonders bevorzugt mindestens 8 Gew.-%, insbesondere mindestens 10 Gew.-%.

Andererseits darf die Konzentration der Komponenten (a1) bis (a3) in der bereitgestellten Mischung nicht zu hoch gewählt werden, da ansonsten kein poröses Material mit günstigen Eigenschaften erhalten wird. Im Allgemeinen beträgt der Anteil der Komponenten (a1) bis (a3) am Gesamtgewicht der Komponenten (a1) bis (a3) und dem Lösungsmittel, welches 100 Gew.-% ergibt, höchstens 40 Gew.-%. Bevorzugt beträgt der Anteil der Komponenten (a1) bis (a3) am Gesamtgewicht der Komponenten (a1) bis (a3) und dem Lösungsmittel, welches 100 Gew.-% ergibt, höchstens 35 Gew.-%, besonders bevorzugt höchstens 25 Gew.-%, insbesondere höchstens 20 Gew.-%.

Vorzugsweise beträgt der Gewichtsanteil der Komponenten (a1) bis (a3) am Gesamtgewicht der Komponenten (a1) bis (a3) und des Lösungsmittels, welches 100 Gew.-% ergibt, insgesamt von 8 bis 25 Gew.-%, insbesondere von 10 bis 20 Gew.-%, besonders bevorzugt von 12 bis 18 Gew.-%. Die Einhaltung der Menge der Einsatzstoffe im genannten Bereich führt zu porösen Materialien mit besonders günstiger Porenstruktur, geringer Wärmeleitfähigkeit und geringer Schrumpfung bei der Trocknung.

Vor der Umsetzung gemäß Schritt (a) des erfindungsgemäßen Verfahren erfolgt vorzugsweise das Bereitstellen der Komponenten (a1), (a2), ggf. (a3) und ggf. (a4) und des Lösungsmittels.

Vorzugsweise werden die Komponenten (a1) einerseits und (a2) sowie ggf. (a3) und ggf. (a4) andererseits getrennt voneinander jeweils in einer geeigneten Teilmenge des Lösungsmittels bereitgestellt. Die getrennte Bereitstellung ermöglicht die optimale Kontrolle beziehungsweise Steuerung der Gelierungsreaktion vor und während des Vermischens.

Sofern Wasser als Komponente (a3) eingesetzt wird, wird Komponente (a3) besonders bevorzugt getrennt von Komponente (a1) bereitgestellt. Dies vermeidet die Reaktion von Wasser mit Komponente (a1) unter Bildung von Netzwerken ohne Anwesenheit der Komponente (a2). Andernfalls führt die Vorabmischung von Wasser mit Komponente (a1) zu weniger günstigen Eigenschaften in Bezug auf die Homogenität der Porenstruktur und die Wärmeleitfähigkeit der resultieren Materialien.

Die vor Durchführung von Schritt (a) bereitgestellte Mischung oder Mischungen können außerdem übliche, dem Fachmann bekannte Hilfsmittel als weitere Bestandteile enthalten. Genannt seien beispielsweise oberflächenaktive Substanzen, Keimbildungsmittel, Oxidationsstabilisatoren, Gleit- und Entformungshilfen, Farbstoffe und Pigmente, Stabilisatoren, z.B. gegen Hydrolyse, Licht, Hitze oder Verfärbung, anorganische und/oder organische Füllstoffe, Verstärkungsmittel und Biozide.

Nähere Angaben über die oben genannten Hilfsmittel- und Zusatzstoffe sind der Fachliteratur zu entnehmen, z.B. aus Plastics Additive Handbook, 5th edition, H. Zweifel, ed. Hanser Publishers, München, 2001, 104-127.

Um die Umsetzung gemäß Schritt (a) des bevorzugten Verfahrens durchzuführen, muss zunächst eine homogene Mischung der vor der Umsetzung gemäß Schritt (a) bereitgestellten Komponenten erzeugt werden.

Das Bereitstellen der im Rahmen von Schritt (a) umgesetzten Komponenten kann auf übliche Weise erfolgen. Bevorzugt wird dazu ein Rührer oder eine andere Mischvorrichtung eingesetzt, um eine gute und schnelle Durchmischung zu erzielen. Die zur Erzeugung der homogenen Mischung benötigte Zeitdauer sollte klein im Verhältnis zur der Zeitdauer sein, in der die Gelierungsreaktion zu der zumindest teilweisen Ausbildung eines Gels führt, um Mischfehler zu vermeiden. Die sonstigen Mischbedingungen sind in der Regel nicht kritisch, beispielsweise kann man bei 0 bis 100°C und 0,1 bis 10 bar (absolut), insbesondere z.B. bei Raumtemperatur und Atmosphärendruck, mischen. Nach erfolgter Erzeugung einer homogenen Mischung wird die Mischapparatur vorzugsweise abgeschaltet.

Bei der Gelierungsreaktion handelt es sich um eine Polyadditionsreaktion, insbesondere um eine Polyaddition von Isocyanatgruppen und Aminogruppen.

Unter einem Gel soll ein vernetztes System auf Basis eines Polymers verstanden werden, das in Kontakt mit einer Flüssigkeit (sog. Solvogel oder Lyogel, bzw. mit Wasser als Flüssigkeit: Aquagel oder Hydrogel) vorliegt. Dabei bildet die Polymerphase ein kontinuierliches räumliches Netzwerk.

Im Rahmen von Schritt (a) des erfindungsgemäßen Verfahrens entsteht das Gel üblicherweise durch Ruhenlassen, z.B. durch einfaches Stehenlassen des Behälters, Reaktionsgefäßes oder Reaktors, in dem sich die Mischung befindet (im folgenden Geliervorrichtung genannt). Bevorzugt wird während des Gelierens (Gelbildung) die Mischung nicht mehr gerührt oder durchmischt, weil dies die Ausbildung des Gels behindern könnte. Es hat sich als vorteilhaft erwiesen, die Mischung während des Gelierens abzudecken bzw. die Geliervorrichtung zu verschließen.

Die Gelierung ist dem Fachmann an sich bekannt und wird beispielsweise in der WO-2009/027310 auf Seite 21, Zeile 19 bis Seite 23, Zeile 13 beschrieben.

Im Rahmen des bevorzugten Verfahrens wird im Rahmen von Schritt (b) das Lösungsmittel entfernt (Trocknung). Grundsätzlich kommt eine Trocknung unter überkritischen Bedingungen in Betracht, vorzugsweise nach Austausch des Lösungsmittels durch CO₂ oder anderen für Zwecke der überkritischen Trocknung geeigneter Lösungsmittel. Eine derartige Trocknung ist dem Fachmann an sich bekannt. Überkritische Bedingungen kennzeichnen eine Temperatur und einen Druck, bei der die zu entfernende fluide Phase im überkritischen Zustand vorliegt. Hierdurch lässt sich die Schrumpfung des Gelkörpers beim Entfernen des Lösungsmittels reduzieren. Das aus der überkritischen Trocknung erhaltene Material wird als Aerogel bezeichnet.

Es ist allerdings angesichts der einfachen Verfahrensführung bevorzugt, die erhaltenen Gele durch Überführung der im Gel enthaltenen Flüssigkeit in den gasförmigen Zustand bei einer Temperatur und einem Druck unterhalb der kritischen Temperatur und des kritischen Drucks der im Gel enthaltenen Flüssigkeit zu trocknen. Das aus der subkritischen Trocknung erhaltene Material wird als Xerogel bezeichnet.

Vorzugsweise erfolgt das Trocknen des erhaltenen Gels durch Überführung des Lösungsmittels in den gasförmigen Zustand bei einer Temperatur und einem Druck unterhalb der kritischen Temperatur und des kritischen Drucks des Lösungsmittels. Demzufolge erfolgt vorzugsweise das Trocknen durch Entfernung des Lösungsmittels, das bei der Umsetzung zugegen war, ohne vorherigen Austausch gegen ein weiteres Lösungsmittel. Entsprechende Methoden sind dem Fachmann ebenfalls bekannt und werden in der WO-2009/027310 auf Seite 26, Zeile 22 bis Seite 28, Zeile 36 beschrieben.

Die erfindungsgemäß eingesetzten organischen Aerogele oder Xerogele können auf verschiedene Weise in den zusammenhängend evakuierbaren Bereich der erfindungsgemäßen Vorrichtung eingebracht werden.

Die organischen Aerogele oder organischen Xerogele können beispielweise wie in der EP-A 11155833.4 beschrieben durch Zerkleinern in ein Pulver umgewandelt werden. Anschließend kann das Pulver in den zusammenhängend evakuierbaren Bereich eingeblasen werden oder über eine Öffnung, wie zum Beispiel in der WO 2004/010042 beschrieben, eingebracht werden.

Alternativ kann das Xerogel in noch fließfähigem Zustand, d. h. vor der vollständigen Aushärtung, in den zusammenhängend evakuierbaren Bereich eingebracht werden, beispielsweise in einem Bauteil, welches später in der Vorrichtung den zusammenhängend evakuierbaren Bereich bildet. Dort kann das Gel aushärten, woraufhin wie oben beschrieben das Lösungsmittel entfernt wird.

Eine weitere bevorzugte Variante der Einbringung der erfindungsgemäß verwendeten Aerogele oder Xerogele ist durch folgende Verfahrensschritte gegeben: (i) Bereitstellen des organischen Aerogels oder Xerogels als Formkörper, d. h. als vorgeformtes Teil, anschließend (ii) Umbauen des Formkörpers durch Teile der späteren erfindungsgemäßen Vorrichtung. Diese Teile sind insbesondere modulare Bestandteile der erfindungsgemäßen Vorrichtung, insbesondere Bauteile aus Kunststoff, welche in der erfindungsgemäßen Vorrichtung den zusammenhängend evakuierbaren Bereich umschließen. Mit anderen Worten: die erfindungsgemäße Vorrichtung oder ein den zusammenhängend evakuierbaren Bereich umfassendes modulares Teil der späteren Vorrichtung, wie zum Beispiel das Gehäuse der Vorrichtung und/oder eine Seitenwand oder die Tür der Vorrichtung, wird um das vorgeformte organische Aerogel oder Xerogel herum aufgebaut.

Gegenstand der vorliegenden Erfindung ist außerdem die Verwendung der oben beschriebenen organischen Aerogele oder organischen Xerogele innerhalb eines zusammenhängend evakuierbaren Bereiches in Vorrichtungen, die neben dem zusammenhängend evakuierbaren Bereich einen temperierbaren Nutzbereich, der durch den zusammenhängend evakuierbaren Bereich gegenüber der Umgebungstemperatur thermisch gedämmt wird, aufweisen, wobei der zusammenhängend evakuierbare Bereich mindestens 30 Vol.-% des gesamten Volumens ausmacht, welches von einem porösen und/oder zellulären Dämmstoff in der Vorrichtung eingenommen wird.

### Beispiele

Die thermische Leitfähigkeit wurde bei 23°C mittels einer Zwei-Platten Apparatur bestimmt. Dazu wurde eine zentrale, kreisförmige Metallplatte kontrolliert beheizt. Sie war zu beiden Seiten von zwei identischen Proben bekannter Dicke umgeben. Die äußeren Seiten der Proben waren an thermisch kontrollierte Wärmesenken angekoppelt. Die Heizleistung wurde derart nachgeregelt, dass sich jeweils ein konstanter Temperaturgradient über den Proben einstellt. Die in der Heizplatte eingebrachte elektrische Energie fließt als Wärme symmetrisch durch die beiden Proben ab. Um einen eindimensionalen Wärmefluss zu gewährleisten, war die zentrale Heizplatte von zwei konzentrischen Schutzringen umgeben, die auf derselben Temperatur gehalten werden wie die zentrale Platte.

### Zur Herstellung von Xerogelen wurden folgende Verbindungen eingesetzt:

Oligomeres MDI (Lupranat® M50) mit einem NCO-Gehalt von 31,5 g pro 100 g nach ASTM D-5155-96 A, einer Funktionalität im Bereich von 2,8 bis 2,9 und einer Viskosität von 550 mPa.s bei 25°C nach DIN 53018 (nachfolgend "Verbindung M50")
3,3',5,5'-Tetraethyl-4,4'-diaminodiphenylmethan (nachfolgend "MDEA")

### Katalysator: Triethanolamin

### Beispiel 1

2700 mL einer 23,4 gew.-%igen Lösung der Verbindung M50 in Aceton wurde mit 2700 mL einer Aceton-Lösung vermischt, die 1,8 Gew% MDEA, 0,9 Gew% Triethanolamin und 1200g Wasser enthielt. Man erhielt eine klare, niedrigviskose Mischung. Die Mischung wurde bei Raumtemperatur 24 Stunden zur Aushärtung stehen gelassen. Anschließend wurde die Flüssigkeit (Aceton) durch 7 Tage langes Trocknen bei 20°C entfernt. Das erhaltene Material hatte eine Dichte von 130 g/L.

Die druckabhängige Wärmeleitfähigkeit wurde anhand eines Prüfkörpers der Länge 320 mm und der Breite 450 mm bei einer Dicke von 25 mm bestimmt. Die Ergebnisse sind in Tabelle 1 zusammengefasst.

**Tabelle 1**

| Druck [mbar] | Wärmeleitfähigkeit [mW/m^{∗}K] |
|---|---|
| 0,01 | 4,4 |
| 0,1 | 5,3 |
| 1 | 7,1 |
| 10 | 15 |
| 100 | 26 |
| 1000 | 34 |

### Beispiel 2 (Vergleichsbeispiel)

In Beispiel 2 wurde ein wärmedämmender Hartschaum auf Basis von Polyurethan hergestellt und mit Beispiel 1 verglichen.

Zu Herstellung des Polyurethanschaums wurden folgende Verbindungen eingesetzt:
Polyol A: Polyetheralkohol aus Saccharose, Glycerin und Propylenoxid, Hydroxylzahl 490
Polyol B: Polyetheralkohol aus Propylenglykol und Propylenoxid, Hydroxylzahl 105
Polyol C: Polyetheralkohol aus Propylenglykol und Propylenoxid, Hydroxylzahl 250

Zusatzmittel 1: Tegostab® B 8870 (Silikonstabilisator der Firma Evonik)
Zusatzmittel 2: Ortegol® 501 (ein zellöffnendes Tensid der Firma Evonik)

Katalysator 1: Polycat® 58 (ein tertiäres Amin der Firma Air Products)
Katalysator 2: Kaliumacetat in Ethylenglykol (BASF)
Oligomeres MDI (Lupranat® M70) mit einem NCO-Gehalt von 31,4 g pro 100 g nach ASTM D-5155-96 A, einer Funktionalität im Bereich von ca. 2,9 und einer Viskosität von 650 mPa.s bei 25°C nach DIN 53018 (nachfolgend "Verbindung M70").

Aus den angegebenen Rohstoffen wurde durch Durchmischen eine Polyolkomponente hergestellt und mit dem Isocyanat (Verbindung M70) umgesetzt. Die Mengen der verwendeten Einsatzstoffe finden sich in Tabelle 2. Die Vermischung erfolgte in einem Mischkopf. Die Reaktionsmischung wurde in einer Laborform mit den Seitenlängen 418x700x455 mm ausgetragen und dort aushärten gelassen.

**Tabelle 2**

| | Beispiel 2V [Gewichtsteile] |
|---|---|
| Polyol A | 44,10 |
| Polyol B | 44,10 |
| Polyol C | 9,15 |
| Wasser | 0,55 |
| Stabilisator | 0,90 |
| Katalysator 1 | 0,50 |
| Katalysator 2 | 0,70 |
| Zellöffner | 1,80 |
| Cyclopentan | 9,50 |
| Verbindung M70 | 194 |
| Kennzahl | 244 |

Aus dem so erhaltenen Hartschaum sowie aus dem Xerogel wurden Prüfkörper der Größe 19x19x2cm herausgesägt, in eine gasdichte Folie verpackt und diese nach dem Evakuieren auf Drücke kleiner 0,1 mbar verschweißt. Dabei wurde die Evakuierzeit bestimmt (Tabelle 3).

**Tabelle 3**

| Probe | Evakuierungszeit [min] bis < 0,1 mbar | Wärmeleitfähigkeit [mW/m^{∗}K] bei < 0,1 mbar |
|---|---|---|
| Beispiel 1 | 5 | 4-5 |
| Beispiel 2V | 15 | 7-9 |

Durch die Verwendung von organischen Xerogelen auf Basis von Polyharnstoff konnte die Wärmeleitfähigkeit im Vergleich zu PUR-Hartschaum, der für Kühlschränke als Dämmstoff verwendet wird, verbessert werden. Gleichzeitig wurde die Evakuierungszeit signifikant verringert.

## Patentansprüche

1. Dynamisch evakuierbare und elektrisch betriebene Vorrichtung umfassend einen zusammenhängend evakuierbaren Bereich und einen temperierbaren Nutzbereich, der durch den zusammenhängend evakuierbaren Bereich gegenüber der Umgebungstemperatur thermisch gedämmt wird, sowie ein Mittel zur aktiven Aufrechterhaltung eines Vakuums, so dass der Druck im zusammenhängend evakuierbaren Bereich der Vorrichtung zeitlich konstant in einem vorgegebenen Druckbereich liegt, wobei der zusammenhängend evakuierbare Bereich mindestens 20 Vol.-% des gesamten Volumens ausmacht, welches von einem porösen und/oder zellulären Dämmstoff in der Vorrichtung eingenommen wird, und der zusammenhängend evakuierbare Bereich mindestens ein organisches Aerogel und/oder organisches Xerogel beinhaltet, wobei das organische poröse Material in einem Verfahren erhalten wird, welches folgende Schritte umfasst: (a) Umsetzung von mindestens einem mehrfunktionellen Isocyanat (a1) und mindestens einem mehrfunktionellen aromatischen Amin (a2) in einem Lösungsmittel optional in Gegenwart von Wasser als Komponente (a3) und optional in Gegenwart mindestens eines Katalysators (a4); (b) Entfernung des Lösungsmittels unter Erhalt des Aerogels oder Xerogels, wobei das mindestens eine mehrfunktionelle aromatische Amin (a2) mindestens ein mehrfunktionelles aromatisches Amin einer Struktur gemäß der allgemeinen Formel I aufweist, 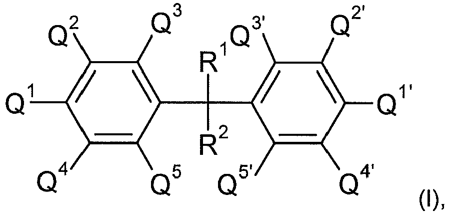 wobei R¹ und R² gleich oder unterschiedlich sein können und unabhängig voneinander ausgewählt werden aus Wasserstoff und linearen oder verzweigten Alkylgruppen mit von 1 bis 6 Kohlenstoffatomen und wobei sämtliche Substituenten Q¹ bis Q⁵ und Q^{1'} bis Q^{5'} gleich oder unterschiedlich sind und unabhängig voneinander ausgewählt werden aus Wasserstoff, einer primären Aminogruppe und einer linearen oder verzweigten Alkylgruppe mit von 1 bis 12 Kohlenstoffatomen, wobei die Alkylgruppe weitere funktionelle Gruppen tragen kann, unter der Voraussetzung, dass die Verbindung gemäß der allgemeinen Formel I mindestens zwei primäre Aminogruppen umfasst, wobei zumindest eines aus Q¹, Q³ und Q⁵ eine primäre Aminogruppe ist und zumindest eines aus Q^{1'}, Q^{3'} und Q^{5'} eine primäre Aminogruppe ist, wobei Q², Q⁴, Q^{2'} und Q^{4'} so gewählt werden, dass die Verbindung gemäß der allgemeinen Formel I mindestens eine lineare oder verzweigte Alkylgruppe, die weitere funktionelle Gruppen tragen kann, mit von 1 bis 12 Kohlenstoffatomen in α-Position zu mindestens einer an den aromatischen Kern gebundenen primären Aminogruppe aufweist.

2. Vorrichtung nach Anspruch 1, wobei die Vorrichtung ein Kühlgerät ist.

3. Vorrichtung nach Anspruch 1 oder 2, wobei die Vorrichtung ein Kühlschrank ist.

4. Vorrichtung nach einem oder mehreren der Ansprüche 1 bis 3, wobei das organische Aerogel oder Xerogel eine volumengewichtete mittlere Porengröße von 50 bis 3000 nm aufweist.

5. Vorrichtung nach einem oder mehreren der Ansprüche 1 bis 4, wobei ein organisches Xerogel verwendet wird.

6. Vorrichtung nach einem oder mehreren der Ansprüche 1 bis 5, wobei Komponente (a1) oligomeres Diphenylmethandiisocyanat enthält und eine Funktionalität von mindestens 2,4 aufweist.

7. Vorrichtung nach einem oder mehreren der Ansprüche 1 bis 6, wobei die Umsetzung in Gegenwart eines Katalysators durchgeführt wird.

8. Vorrichtung nach einem oder mehreren der Ansprüche 1 bis 7, wobei die Umsetzung in Gegenwart von Wasser (a3) sowie optional in Gegenwart eines Katalysators (a4) durchgeführt wird.

9. Vorrichtung nach einem oder mehreren der Ansprüche 1 bis 8, wobei gemäß Schritt (a) die Umsetzung von Komponente (a1) und einem mehrfunktionellen aromatischen Amin als Komponente (a2) in Abwesenheit von Wasser (a3) durchgeführt wird.

10. Verwendung von organischen Aerogelen oder organischen Xerogelen wie in den Ansprüchen 1 bis 9 definiert innerhalb eines zusammenhängend evakuierbaren Bereiches in dynamisch evakuierbaren und elektrisch betriebenen Vorrichtungen, die neben dem zusammenhängend evakuierbaren Bereich einen temperierbaren Nutzbereich, der durch den zusammenhängend evakuierbaren Bereich gegenüber der Umgebungstemperatur thermisch gedämmt wird sowie ein Mittel zur aktiven Aufrechterhaltung eines Vakuums, so dass der Druck im zusammenhängend evakuierbaren Bereich der Vorrichtung zeitlich konstant in einem vorgegebenen Druckbereich liegt, aufweisen, wobei der zusammenhängend evakuierbare Bereich mindestens 20 Vol.-% des gesamten Volumens ausmacht, welches von einem porösen und/oder zellulären Dämmstoff in der Vorrichtung eingenommen wird.

## Claims

1. A dynamically evacuable and electrically operated device comprising a coherently evacuable region and a temperature-controllable useful region, which is thermally insulated from the ambient temperature by the coherently evacuable region, and also a means for actively maintaining a vacuum, such that the pressure in the coherently evacuable region of the device is constantly within a defined pressure range, said coherently evacuable region making up at least 20% by volume of the total volume which is occupied by a porous and/or cellular insulating material in the device, and said coherently evacuable region comprising at least one organic aerogel and/or organic xerogel, wherein the organic porous material is obtained in a process which comprises the following steps: (a) reaction of at least one polyfunctional isocyanate (a1) and at least one polyfunctional aromatic amine (a2) in a solvent, optionally in the presence of water as component (a3) and optionally in the presence of at least one catalyst (a4); (b) removing the solvent to obtain the aerogel or xerogel, wherein the at least one polyfunctional aromatic amine (a2) has with at least one polyfunctional aromatic amine has a structure of the general formula I 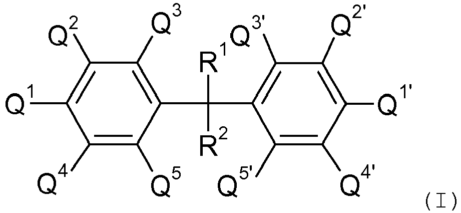 where R¹ and R² may be the same or different and are each independently selected from hydrogen and linear or branched alkyl groups having from 1 to 6 carbon atoms, and where all substituents Q¹ to Q⁵ and Q^{1'} to Q^{5'} are the same or different and are each independently selected from hydrogen, a primary amino group and a linear or branched alkyl group having from 1 to 12 carbon atoms, where the alkyl group may bear further functional groups provided that the compound of the general formula I comprises at least two primary amino groups, where at least one of Q¹, Q³ and Q⁵ is a primary amino group and at least one of Q^{1'}, Q^{3'} and Q^{5'} is a primary amino group, wherein Q², Q⁴, Q^{2'} and Q^{4'} are selected such that the compound of the general formula I has at least one linear or branched alkyl group which may bear further functional groups and has from 1 to 12 carbon atoms in the α position to at least one primary amino groups bonded to the aromatic ring.

2. The device according to claim 1, wherein the device is a refrigerating unit.

3. The device according to claim 1 or 2, wherein the device is a refrigerator.

4. The device according to one or more of claims 1 to 3, wherein the organic aerogel or xerogel has a volume-weighted mean pore size of 50 to 3000 nm.

5. The device according to one or more of claims 1 to 4, wherein an organic xerogel is used.

6. The device according to one or more of claims 1 to 5, wherein component (a1) comprises oligomeric diphenylmethane diisocyanate and has a functionality of at least 2.4.

7. The device according to one or more of claims 1 to 6, wherein the reaction is performed in the presence of a catalyst.

8. The device according to one or more of claims 1 to 7, wherein the reaction is performed in the presence of water (a3) and optionally in the presence of a catalyst (a4) .

9. The device according to one or more of claims 1 to 8, wherein the reaction of component (a1) and a polyfunctional aromatic amine as component (a2) in step (a) is performed in the absence of water (a3).

10. The use of organic aerogels or organic xerogels as defined in claims 1 to 9 within a coherently evacuable region in dynamically evacuable and electrically operated devices which have, in addition to the coherently evacuable region, a temperature-controllable useful region, which is thermally insulated from the ambient temperature by the coherently evacuable region, and also a means for actively maintaining a vacuum, such that the pressure in the coherently evacuable region of the device is constantly within a defined pressure range, said coherently evacuable region making up at least 20% by volume of the total volume which is occupied by a porous and/or cellular insulating material in the device.

## Revendications

1. Dispositif pouvant être évacué dynamiquement et à fonctionnement électrique, comprenant une zone continue pouvant être évacuée et un zone utile pouvant être conditionnée en température, qui est isolée thermiquement de la température ambiante par la zone continue pouvant être évacuée, ainsi qu'un moyen pour le maintien actif d'un vide, de telle sorte que la pression dans la zone continue pouvant être évacuée du dispositif se situe de manière constante dans le temps dans une plage de pression prédéterminée, la zone continue pouvant être évacuée représentant au moins 20 % en volume du volume total, qui est occupé par une matière isolante poreuse et/ou cellulaire dans le dispositif, et la zone continue pouvant être évacuée contenant au moins un aérogel organique et/ou un xérogel organique, le matériau poreux organique étant obtenu par un procédé qui comprend les étapes suivantes : (a) la mise en réaction d'au moins un isocyanate polyfonctionnel (a1) et d'au moins une amine aromatique polyfonctionnelle (a2) dans un solvant, éventuellement en présence d'eau en tant que composant (a3) et éventuellement en présence d'au moins un catalyseur (a4) ; (b) l'élimination du solvant pour obtenir l'aérogel ou le xérogel, ladite au moins une amine aromatique polyfonctionnelle (a2) comprenant au moins une amine aromatique polyfonctionnelle d'une structure selon la formule générale I : 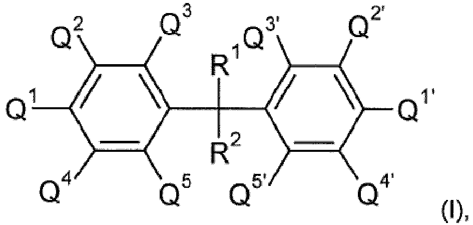 dans laquelle R¹ et R² peuvent être identiques ou différents, et sont choisis indépendamment l'un de l'autre parmi l'hydrogène et les groupes alkyle linéaires ou ramifiés de 1 à 6 atomes de carbone, et dans laquelle tous les substituants Q¹ à Q⁵ et Q^{1'} à Q^{5'} sont identiques ou différents, et sont choisis indépendamment les uns des autres parmi l'hydrogène, un groupe amino primaire et un groupe alkyle linéaire ou ramifié de 1 à 12 atomes de carbone, le groupe alkyle pouvant porter des groupes fonctionnels supplémentaires, à condition que le composé selon la formule générale I comprenne au moins deux groupes amino primaires, au moins substituant parmi Q¹, Q³ et Q⁵ étant un groupe amino primaire, et au moins un substituant parmi Q^{1'}, Q^{3'} et Q^{5'} étant un groupe amino primaire, Q², Q⁴, Q^{2'} et Q^{4'} étant choisis de telle sorte que le composé selon la formule générale I comprenne au moins un groupe alkyle linéaire ou ramifié, qui peut porter des groupes fonctionnels supplémentaires, de 1 à 12 atomes de carbone, en position α par rapport à au moins un groupe amino primaire relié au noyau aromatique.

2. Dispositif selon la revendication 1, dans lequel le dispositif est un appareil réfrigérant.

3. Dispositif selon la revendication 1 ou 2, dans lequel le dispositif est un réfrigérateur.

4. Dispositif selon une ou plusieurs des revendications 1 à 3, dans lequel l'aérogel ou le xérogel organique présente une taille de pore moyenne pondérée en volume de 50 à 3 000 nm.

5. Dispositif selon une ou plusieurs des revendications 1 à 4, dans lequel un xérogel organique est utilisé.

6. Dispositif selon une ou plusieurs des revendications 1 à 5, dans lequel le composant (a1) contient un diisocyanate de diphénylméthane oligomère et présente une fonctionnalité d'au moins 2,4.

7. Dispositif selon une ou plusieurs des revendications 1 à 6, dans lequel la réaction est réalisée en présence d'un catalyseur.

8. Dispositif selon une ou plusieurs des revendications 1 à 7, dans lequel la réaction est réalisée en présence d'eau (a3) et éventuellement en présence d'un catalyseur (a4).

9. Dispositif selon une ou plusieurs des revendications 1 à 8, dans lequel la réaction du composant (a1) et d'une amine aromatique polyfonctionnelle en tant que composant (a2) selon l'étape (a) est réalisée en l'absence d'eau (a3).

10. Utilisation d'aérogels organiques ou de xérogels organiques tels que définis dans les revendications 1 à 9 à l'intérieur d'une zone continue pouvant être évacuée dans des dispositifs pouvant être évacués dynamiquement et à fonctionnement électrique, qui comprennent, outre la zone continue pouvant être évacuée, une zone utile pouvant être conditionnée en température, qui est isolée thermiquement de la température ambiante par la zone continue pouvant être évacuée, ainsi qu'un moyen pour le maintien actif d'un vide, de telle sorte que la pression dans la zone continue pouvant être évacuée du dispositif se situe de manière constante dans le temps dans une plage de pression prédéterminée, la zone continue pouvant être évacuée représentant au moins 20 % en volume du volume total, qui est occupé par une matière isolante poreuse et/ou cellulaire dans le dispositif.
